(19) Europäisches Patentamt / European Patent Office / Office européen des brevets

(11) **EP 1 905 988 B1**

(12) **EUROPEAN PATENT SPECIFICATION**

(45) Date of publication and mention
of the grant of the patent:
**05.04.2017 Bulletin 2017/14**

(51) Int Cl.:
*F02D 33/02* (2006.01)    *F02D 13/02* (2006.01)
*F02D 23/02* (2006.01)    *F02D 37/02* (2006.01)
*F02D 41/40* (2006.01)    *F02D 41/14* (2006.01)
*F02B 37/013* (2006.01)    *F02B 37/16* (2006.01)
*F02B 37/18* (2006.01)    *F02B 37/24* (2006.01)
*F02B 39/10* (2006.01)    *F02B 37/02* (2006.01)
*F02P 5/15* (2006.01)    *F02B 37/12* (2006.01)
*F02M 26/01* (2016.01)    *F02D 41/18* (2006.01)
*F02B 29/04* (2006.01)    *F02B 37/00* (2006.01)
*F02M 26/05* (2016.01)    *F02M 26/08* (2016.01)

(21) Application number: **07015616.1**

(22) Date of filing: **08.08.2007**

(54) **Control device of an internal combustion engine**

Steuervorrichtung eines Verbrennungsmotors

Dispositif de commande pour un moteur à combustion interne

(84) Designated Contracting States:
**DE**

(30) Priority: **21.09.2006 JP 2006255721**

(43) Date of publication of application:
**02.04.2008 Bulletin 2008/14**

(73) Proprietor: **Hitachi, Ltd.**
**Chiyoda-ku**
**Tokyo 100-8280 (JP)**

(72) Inventors:
• **Suzuki, Kunihiko**
**Tokyo 100-8220 (JP)**

• **Nemoto, Mamoru**
**Tokyo 100-8220 (JP)**

(74) Representative: **MERH-IP Matias Erny Reichl**
**Hoffmann**
**Patentanwälte PartG mbB**
**Paul-Heyse-Strasse 29**
**80336 München (DE)**

(56) References cited:
**DE-B3- 10 256 474**    **US-A1- 2004 093 148**
**US-A1- 2004 118 390**    **US-A1- 2005 034 706**
**US-A1- 2005 072 151**

**Description**

TECHNICAL FIELD:

The present invention relates to a control device of an internal combustion engine having a turbo charger and a variable valve train.

BACKGROUND ART:

Conventionally, in an internal combustion engine having a variable valve train capable of arbitrarily changing a valve opening characteristic, as charging efficiency supplied into a cylinder and the amount of residual gas of combustion gas in a previous cycle, i.e., an internal EGR ratio, differ in accordance with the valve opening characteristic, the variable valve train is controlled based on the relation between the valve opening characteristic and the charging efficiency or the relation between the valve opening characteristic and the internal EGR ratio in correspondence with an operating point of the internal combustion engine.

For example, Japanese Published Unexamined Patent Application No. 2005-307847 (Patent Document 1) discloses an internal combustion engine having a variable valve train in which the charging efficiency, the internal EGR ratio based on a clearance volume in an exhaust valve closing time, and the internal EGR ratio based on spit-back in an overlap duration are calculated based on an engine speed of the internal combustion engine, intake pipe pressure and a control amount of the variable valve train.

[Patent Document 1] Japanese Published Unexamined Patent Application No. 2005-307847

However, in the structure disclosed in the Patent Document 1, the internal EGR ratio calculation means is applicable only when the internal EGR ratio is increased as the overlap duration is increased. In an operation status, which is characteristic of an internal combustion engine having a turbo charger, where the internal EGR is scavenged and the internal EGR ratio is reduced as the overlap duration is increased, the charging efficiency and the internal EGR ratio cannot be accurately calculated.

US 2004/118390 A1 discloses a control system for a compression ignition internal combustion engine which is capable of expanding a region for executing compression ignition, on the low-load side, while positively obtaining a required power output from the engine. The amount of residual combustion gas is determined depending on operating conditions of the engine, and based on the determined amount of residual combustion gas, part of combustion gas is retained in each combustion chamber after combustion. It is judged whether or not supercharging of fresh air should be executed for self-ignition, based on the operating conditions of the engine, and when it is judged that the supercharging should be executed, supercharging of fresh air flowing to the combustion chamber is executed.

US 2005/072151 A1 discloses controlling a variable valve timing device to fully scavenge residual gas from a combustion chamber of a cylinder when boost pressure is greater than exhaust gas back pressure. Valve overlap is increased by retarding exhaust valve timing.

SUMMARY OF THE INVENTION:

The present invention has been made in view of the above problem, and has an object to provide a control device of an internal combustion engine having a variable valve train and a turbo charger, in which, upon acceleration, even in an operation status where the internal EGR is scavenged as the overlap duration is increased, the charging efficiency and the internal EGR ratio are accurately calculated, and the overlap duration is more preferably controlled, thereby a turbo lag of the turbo charger internal combustion engine can be reduced without exhaust deterioration.

The above mentioned features may be combined, in any way, partly or as a whole.

BRIEF EXPLANATION OF THE DRAWINGS:

Fig. 1 is a system configuration of the internal combustion engine of the embodiment in the control device of the internal combustion engine of the present invention.
Fig. 2 is a diagram for explaining the Operation range of the internal combustion engine having the turbo charger and the overlap status of the intake and exhaust valves.
Fig. 3 is a diagram for explaining the influence by the relation between the intake pressure and the exhaust pressure an the relation between the overlap duration and the internal EGR ratio.
Fig. 4 is a flowchart showing the procedure of execution of arithmetic operation to obtain the target valve control amounts in the control device of the internal combustion engine in the first embodiment.

Fig. 5 is a flowchart showing the procedure of execution of arithmetic operation to obtain the fuel injection volume and the ignition timing in the control device of the internal combustion engine in the first embodiment.

Fig. 6 A flowchart showing the procedure of execution of arithmetic Operation to obtain the internal EGR scavenging ratio in the control device of the internal combustion engine in the first embodiment.

Fig. 7 is a flowchart showing the procedure of calculation of the intake pressure in the control device of the internal combustion engine in the first embodiment.

Fig. 8 is a flowchart showing the procedure of calculation of the exhaust pressure in the control device of the internal combustion engine in the first embodiment.

Fig. 9 is a flowchart showing the procedure of execution of intake pulsation correction on the intake pressure in the control device of the internal combustion engine in the first embodiment.

Fig. 10 is a flowchart showing the procedure of execution of exhaust pulsation correction on the exhaust pressure in the control device of the internal combustion engine in the first embodiment.

Fig. 11 is a flowchart showing the procedure of execution of control of the overlap duration so as to prevent the blow-by of unburned gas in the control device of the internal combustion engine in the first embodiment.

Fig. 12 is a system configuration of the internal combustion engine applied to the control device of the internal combustion engine in the second embodiment.

Fig. 13 is a flowchart showing the procedure of execution of arithmetic operation to obtain the target valve control amounts in the control device of the internal combustion engine in the second embodiment having the electric power-assisted turbo charger.

Fig. 14 is a system configuration of the internal combustion engine applied to the control device of the internal combustion engine in the third embodiment.

Fig. 15 is a flowchart showing the procedure of execution of arithmetic operation to obtain the target valve control amounts in the control device of the internal combustion engine in the third embodiment having the 2-stage turbo charger.

Explanation of Reference Numerals

1 ··· internal combustion engine, 2 ··· turbo charger, 3 ··· air cleaner, 4 ··· air flow sensor, 5 ··· inter-cooler, 6 ··· intake temperature sensor, 7 ··· throttle valve, 8 ··· intake pressure sensor, 9 ··· tumble control valve, 10 ··· port injection type injector, 11 ··· intake variable valve train, 12 ··· intake cam angle sensor, 13 ··· ignition plug, 14 ··· exhaust variable valve train, 15 ··· exhaust cam angle sensor, 16 ··· knock sensor, 17 ··· crank angle sensor, 18 ··· A/F sensor, 19 ··· catalytic converter, 20, 41, 44 ··· air bypass valve, 21, 42, 45 ··· waste gate valve, 22 ··· intake pipe, 23 ··· exhaust pipe, 24 ··· intake valve, 25 ··· exhaust valve, 30 ··· electric power-assisted turbo, 33 ··· assist motor, 40 ··· turbo charger of low flow rate high pressure charging type, 43 ··· turbo-charger of high flow rate low pressure charging type

DETAILED DESCRIPTION OF THE PREFERRED EMBODIMENTS:

To attain the above object, a control device of an internal combustion engine having the features of claim 1 is provided.

According to another aspect of the invention, the control device of the internal combustion engine is a control device of an internal combustion engine having a variable valve train capable of variably-controlling opening/closing time or a lift amount of at least one of an intake valve and an exhaust value, and a turbo charger, characterized by comprising: internal EGR scavenging ratio arithmetic operation means for, when intake pressure becomes higher in comparison with exhaust pressure in a charging status, performing an arithmetic operation to obtain an internal EGR scavenging ratio as an internal EGR ratio scavenged from a cylinder to an exhaust pipe and reduced in an overlap duration in which both the intake valve and the exhaust valve are opened; and means for controlling the overlap duration so as to control said arithmetic-operated internal EGR scavenging ratio to a predetermined ratio.

According to this invention, in a charging status, when the intake pressure becomes higher in comparison with the exhaust pressure, the arithmetic operation to obtain the internal EGR ratio scavenged from the cylinder to the exhaust pipe in the overlap duration and is reduced is performed, and the overlap duration can be more preferably controlled based on the internal EGR scavenging ratio. Accordingly, a turbo lag which appears upon acceleration of an internal combustion engine having a turbo charger can be reduced.

Further, the control device of the internal combustion engine according to another aspect of the invention is characterized by further comprising: means for performing an arithmetic operation to obtain charging efficiency sucked into the cylinder based on the intake pressure, a control status of the variable valve train of said intake valve, an engine speed of said internal combustion engine and said arithmetic-operated internal EGR scavenging ratio; means for performing an arithmetic operation to obtain a fuel injection volume based on said arithmetic-operated charging efficiency; and means for performing an arithmetic operation to obtain ignition timing based on said arithmetic-operated internal EGR scavenging ratio and said arithmetic-operated charging efficiency.

According to this invention, as the arithmetic operation to obtain the charging efficiency sucked into the cylinder is performed based on the internal EGR scavenging ratio, the intake pressure, the control status of the variable valve train of the intake valve and the engine speed of the internal combustion engine, the charging efficiency can be accurately obtained. Further, the fuel ignition volume and the ignition timing can be appropriately controlled.

Further, the control device of the internal combustion engine according to another aspect of the invention is characterized in that the internal EGR scavenging ratio arithmetic operation means has intake pressure acquisition means for acquiring the intake pressure to the cylinder, and exhaust pressure acquisition means for acquiring the exhaust pressure from the cylinder, and performs the arithmetic operation to obtain the internal EGR scavenging ratio based on the intake pressure acquired by said intake pressure acquisition means and the exhaust pressure acquired by said exhaust pressure acquisition means, the engine speed of the internal combustion engine and the control status of the variable valve train of said intake valve.

According to this invention, the intake pressure to the cylinder is obtained with an intake pressure sensor or the like, and the exhaust pressure from the cylinder is obtained with an exhaust pressure sensor or the like, and the arithmetic operation to obtain the internal EGR scavenging ratio is performed based on the obtained intake pressure and the exhaust pressure. Accordingly, the internal EGR scavenging ratio can be accurately obtained.

Further, the control device of the internal combustion engine according to another aspect of the invention is characterized in that the control device further comprises operation status detection means for determining an operating point of the internal combustion engine, and wherein said intake pressure acquisition means acquires the intake pressure by calculation using intake pressure calculation means for calculating the intake pressure based on the operating point of the internal combustion engine determined by said operation status determination means, a flow rate of gas passing through a compressor of said turbo charger, opening of an air bypass valve to flow backward pressure downstream of the compressor to upstream of the compressor, and opening of a throttle valve. According to this invention, the intake pressure can be accurately calculated by arithmetic operation, and the arithmetic operation to obtain the internal EGR ratio and the charging efficiency can be accurately performed based on the calculated intake pressure.

Further, the control device of the internal combustion engine according to another aspect of the invention is characterized in that the intake pressure acquisition means has means for grasping a pulsation pattern of the intake pressure based on the engine speed of the internal combustion engine and an intake pipe length from a surge tank provided downstream of the throttle valve to respective cylinders, and corrects the intake pressure calculated by said intake pressure calculation means in accordance with the grasped pulsation pattern of the intake pressure. According to this invention, as the intake pressure is obtained in consideration of the pulsation pattern of the intake pressure and the accuracy of the intake pressure can be improved, the arithmetic operation to obtain the internal EGR ratio and the charging efficiency can be accurately performed.

Further, the control device of the internal combustion engine according to another aspect of the invention is characterized in that the control device further comprises operation status detection means for determining an operating point of the internal combustion engine, and wherein said exhaust pressure acquisition means acquires the exhaust pressure by calculation using exhaust pressure calculation means for calculating the exhaust pressure based on the operating point of the engine determined by said operation status determination means, a flow rate of gas passing through a turbine of the turbo charger, and opening of a waste gate valve to control a charging level. According to this invention, the exhaust pressure can be accurately calculated by the arithmetic operation, and the arithmetic operation to obtain the internal EGR ratio and the charging efficiency can be accurately performed based on the calculated exhaust pressure.

Further, the control device of the internal combustion engine according to another aspect of the invention is characterized in that the intake pressure acquisition means has means for grasping a pulsation pattern of the exhaust pressure based on the engine speed of the internal combustion engine, an exhaust pipe volume from the cylinder to the turbo charger or an exhaust pipe length from the cylinder to an exhaust collector unit, and the opening/closing time of the exhaust valve provided in another cylinder coupled via the collector unit, and corrects the exhaust pressure calculated by the exhaust pressure calculation means in accordance with the grasped pulsation pattern of the exhaust pressure. According to this invention, as the exhaust pressure is obtained in consideration of the pulsation pattern of the exhaust pressure and the accuracy of the exhaust pressure can be improved, the arithmetic operation to obtain the internal EGR ratio and the charging efficiency can be accurately performed.

Further, the control device of the internal combustion engine according to another aspect of the invention is characterized in that the turbo charger has an electric power-assisted turbo in which a motor to assist turbine rotary motion is provided on a turbine shaft of the turbo charger, and the internal EGR scavenging ratio arithmetic operation means performs the arithmetic operation to obtain the internal EGR scavenging ratio in consideration of a driving status of said electric power-assisted turbo. According to this invention, as the internal EGR scavenging ratio arithmetic operation means performs the arithmetic operation to obtain the internal EGR scavenging ratio in consideration of a driving status of the electric power-assisted turbo, the arithmetic operation to obtain the internal EGR ratio and the charging efficiency can be accurately performed.

Further, the control device of the internal combustion engine according to another aspect of the invention is characterized in that the turbo charger is composed of a 2-stage turbo charger having two turbo chargers with different flow rate characteristics, and said control device further comprises: operation status detection means for determining the operating point of the internal combustion engine; and means for selecting an operation mode of said 2-stage turbo charger by open/close operating the waste gate valve provided in said respective turbo chargers in correspondence with the operating point of the internal combustion engine determined by said operation status determination means, and further, said internal EGR scavenging ratio arithmetic operation means performs the arithmetic operation to obtain the internal EGR scavenging ratio in consideration of the operation mode of said 2-stage turbo charger.

According to this invention, by taking the operation mode of the 2-stage turbo charger into consideration in the means for estimating the internal EGR scavenging ratio, the internal EGR ratio and the charging efficiency can be accurately estimated.

Further, the control device of the internal combustion engine according to another aspect of the invention is characterized in that the turbo charger is composed of a variable turbo charger having a variable blade on a compressor or a turbine, and has means for detecting an angle of said variable blade, and the internal EGR scavenging ratio arithmetic operation means performs the arithmetic operation to obtain the internal EGR scavenging ratio in consideration of the angle of the variable blade detected by said means for detecting the angle of the variable blade. According to this invention, as the internal EGR scavenging ratio arithmetic operation means performs the arithmetic operation to obtain the internal EGR scavenging ratio in consideration of the angle of the variable blade, the arithmetic operation to obtain the internal EGR ratio and the charging efficiency can be accurately performed.

Further, the control device of the internal combustion engine according to another aspect of the invention is characterized in that the control device further comprises means for performing an arithmetic operation to obtain the charging efficiency charged into the cylinder based on the intake pressure, the control status of the variable valve train of said intake valve, the engine speed of said internal combustion engine and said arithmetic-operated internal EGR scavenging ratio, and determining presence/absence of blow-by of unburned gas from the intake pipe via the cylinder to the exhaust pipe in the overlap duration based on a comparison between said arithmetic-operated charging efficiency charged into the cylinder and maximum charging efficiency chargeable into the cylinder, and when said means for determining presence/absence of blow-by of unburned gas determines that there is blow-by of unburned gas, feed-back controls the variable valve train to reduce the overlap duration.

Further, the control device of the internal combustion engine according to another aspect of the invention is characterized in that the control device further comprises: means for performing an arithmetic operation to obtain the charging efficiency charged into the cylinder based on an air flow rate detected by an air flow sensor; and means for determining presence/absence of blow-by of unburned gas from the intake pipe via the cylinder to the exhaust pipe in the overlap duration based on a comparison between said arithmetic-operated charging efficiency charged into the cylinder and the maximum charging efficiency chargeable into the cylinder, and when said means for determining presence/absence of blow-by of unburned gas determines that there is blow-by of unburned gas, feed-back controls the variable valve train to reduce the overlap duration.

According to these inventions, the arithmetic operation to obtain the charging efficiency charged into the cylinder at steady time or upon acceleration is performed, and based on a comparison between the charging efficiency charged into the cylinder and the maximum charging efficiency chargeable into the cylinder, the presence/absence of blow-by of unburned gas from the intake pipe via the cylinder to the exhaust pipe in the overlap duration is determined. When it is determined that unburned gas is in a blown-by status, the variable valve train is feed-back controlled so as to reduce the overlap duration. Accordingly, the emission deterioration can be prevented.

Further, the control device of the internal combustion engine according to another aspect of the invention is characterized in that the control device further comprises: an air-fuel ratio sensor for detecting an air-fuel ratio of unburned gas supplied into the cylinder based on a non-gas component flowing through the exhaust pipe; and means for determining presence/absence of blow-by of unburned gas from the intake pipe via the cylinder to the exhaust pipe in the overlap duration based on an output value from said air-fuel ratio sensor, and when said means for determining presence/absence of blow-by of unburned gas determines that there is blow-by of unburned gas, feed-back controls the variable valve train to reduce the overlap duration.

According to this invention, the presence/absence of unburned gas blown by from the intake pipe via the cylinder to the exhaust pipe in the overlap duration is determined based on the output value from the air-fuel ratio sensor. When it is determined that there is blow-by of unburned gas, the variable valve train is feed-back controlled so as to reduce the overlap duration. Accordingly, the emission deterioration can be prevented.

Further, the internal combustion engine according to another aspect of the invention is characterized by having a direct-injection type injector which directly injects fuel into the cylinder, and said control device sets fuel injection timing of the direct-injection type injector after the overlap duration.

According to this invention, in an internal combustion engine having a direct-injection type injector which directly injects fuel into the cylinder, the blow-by of unburned fuel to the exhaust pipe can be prevented by setting the fuel injection timing after the overlap duration, and emission deterioration can be prevented.

According to the embodiments of the present invention, in an internal combustion engine having a variable valve train and a turbo charger, upon acceleration, even in an operation status where the internal EGR is scavenged in accordance with increase of the overlap duration, the arithmetic operation to obtain the charging efficiency and the internal EGR ratio is accurately performed and the overlap duration is more preferably controlled, thereby a turbo lag of the turbo charger internal combustion engine can be reduced without deterioration of exhaust emission.

Hereinbelow, a control device of an internal combustion engine according to the present invention will be described based on the drawings.

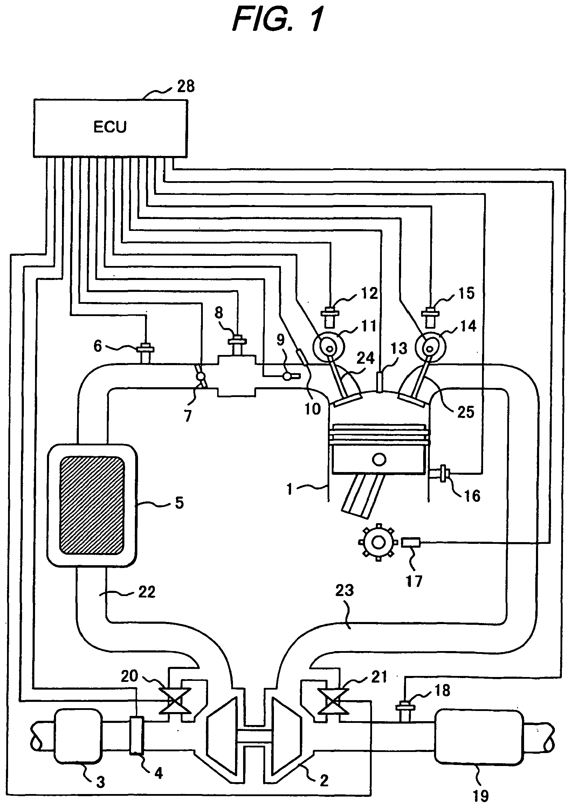

First, a first embodiment in the control device of the internal combustion engine according to the present invention will be described using Figs. 1 to 12. Fig. 1 shows a system configuration of the internal combustion engine of the present invention. An intake pipe 22 forming an intake flow channel and an exhaust pipe 23 forming an exhaust flow channel are connected to an internal combustion engine 1 in the present embodiment. An air cleaner 3 is connected to an upstream part of the intake flow channel. An air flow sensor 4 to measure a flow rate of intake air passing through the intake flow channel is build downstream of the air cleaner 3. A turbo charger 2 is connected to the intake flow channel and the exhaust flow channel. The turbo charger 2 is composed of an exhaust turbine to convert energy of exhaust gas to rotary motion of a turbine blade and a compressor to compress the intake air by rotation of a compressor blade coupled to the turbine blade. The compressor is connected to the intake flow channel, and the turbine is connected to the exhaust flow channel.

An inter-cooler 5 to cool down an intake temperature risen by adiabatic compression is provided downstream of the compressor side of the turbo charger 2. An intake temperature sensor 6 to measure the intake temperature flowing into a cylinder is build downstream of the inter-cooler 5. A throttle valve 7 to control the amount of intake air flowing into the cylinder by narrowing the intake flow channel is provided downstream of the air flow sensor 4. An intake pressure sensor 8 to measure pressure in an intake manifold is build downstream of the throttle valve 7. A tumble control valve 9 to form a longitudinal swirl in a flow in the cylinder by causing deflection in the flow of the intake air into the cylinder so as to enhance the disturbance is provided in an intake port. Note that it may be arranged such that the tumble control valve 9 has a swirl control valve to form a lateral swirl in the flow in the cylinder so as to enhance the disturbance.

An arithmetic operation to obtain charging efficiency at steady time supplied into the cylinder is performed based on an output value from the air flow sensor 4. On the other hand, upon acceleration, an arithmetic operation to obtain the charging efficiency is performed based on an output value from the intake pressure sensor 8, a control status of an intake variable valve train 11 to be described later, an engine speed of the internal combustion engine and an internal EGR scavenging ratio. A port injection type injector 10 to spray fuel in correspondence with the above-described charging efficiency so as to attain a predetermined air-fuel ratio and form a combustible gas mixture is provided. Note that a direct-injection type injector which directly injects fuel into the cylinder may be employed in place of the port injection type injector 10.

The cylinder is provided with a control shaft to variably control a valve lift amount, and the intake variable valve train 11 capable of arbitrarily controlling opening/closing time of the intake valve 24 and the valve lift amount. An angle sensor is attached to the control shaft. An intake cam shaft is provided with an intake cam angle sensor 12 to detect the control status of the intake variable valve train 11 capable of detecting a rotary phase of the intake cam shaft. The combustible gas mixture supplied to the cylinder is compressed with a piston, and at timing where the piston arrives around a top dead point, the gas mixture is ignited with an ignition plug 13. When the piston moves down and arrives around a bottom dead point, the exhaust valve 25 is opened and burned gas is exhausted to the exhaust pipe 23.

The exhaust valve 25 is provided with an exhaust variable valve train 14 capable of arbitrarily controlling opening/closing time of the exhaust valve 25, and an exhaust cam angle sensor 15 to detect a control amount of the exhaust valve 25 is provided. A crankshaft is provided with a crank angle sensor 17 to measure a crank angle and a crank revolution speed.

Normally, the timing to ignite the combustible gas mixture with the ignition plug 13 is set to MBT (Minimum spark advance for best Torque) in which torque of action of combustion pressure on the crankshaft via a crank mechanism becomes maximum. When the ignition timing is set greatly ahead of the MBT, end gas in the cylinder is self-ignited before flame propagation, and improper combustion called knocking may occur. A knock sensor 16 to detect the presence/absence of knocking based on pressure oscillation caused by knocking is built in the cylinder. When knocking occurs, the ignition timing is retard-angle corrected until the knocking does not occur. The high temperature and high pressure exhaust gas discharged from the cylinder is introduced through the exhaust pipe 23 to an exhaust turbine entrance of the turbo charger 2.

The high pressure exhaust gas introduced to the exhaust turbine entrance rotates the turbine blade in the exhaust turbine and then discharged, as pressure-reduced exhaust gas, from an exhaust turbine exit. An A/F sensor 18 to detect an air-fuel ratio of unburned gas from oxygen concentration in the exhaust gas is build downstream of the exhaust turbine. The air-fuel ratio of the gas mixture supplied into the cylinder can be detected from an output value from the A/F sensor 18, and based on the difference between an air-fuel ratio control target value and the actual air-fuel ratio value, the amount of fuel sprayed from the injector 10 is corrected to a target control amount. A catalytic converter 19 to purify hazardous substances in the exhaust gas is provided downstream of the A/F sensor 18.

The turbo charger 2 is provided with an air bypass valve 20 and a waste gate valve 21. The air bypass valve 20 is provided to prevent pressure from a downstream portion of the compressor to an upstream portion of the throttle valve 7 from excessively increasing. When the throttle valve 7 is abruptly closed in a charging status, the air bypass valve 20 is opened so as to flow intake air in the downstream portion of the compressor back to the upstream portion of the compressor, to reduce charging pressure. On the other hand, the waste gate valve 21 is provided to prevent increase in the amount of intake air into the internal combustion engine 1 by high speed revolution of the exhaust turbine with the exhaust gas to an excessive charging level. When the charging pressure of the intake air detected by the intake pressure sensor 8 has become a predetermined value, the waste gate valve 21 is opened so as to introduce the exhaust gas to avoid the exhaust turbine, thereby the charging pressure can be suppressed or predetermined charging pressure can be maintained.

As shown in Fig. 1, the system of the present embodiment has an ECU (Electronic Control Unit) 28. Various sensors such as the above-described intake temperature sensor 6, an opening sensor of the air throttle valve 7, the crank angle sensor 17, an opening sensor of the air bypass valve 20, an opening sensor of the waste gate valve 21, and an angle sensor of the control shaft are connected to the ECU 28. Further, actuators to actuate the throttle valve 7, the injector 10, the intake and exhaust variable valve trains 11 and 14, and the like, are connected to the ECU 28. The ECU 28 is provided with an operation status detection unit. The operation status detection unit determines an operating point of the internal combustion engine 1 based on signals from the intake pressure sensor 8, the crank angle sensor 17, the opening sensor of the throttle valve 7 and the like. The operating point is sectionalized in plural areas in accordance with e.g. engine speed or load of the internal combustion engine 1. The ECU 28 performs an arithmetic operation to obtain target control amounts of actuators corresponding to the sectionalized operating point, and outputs control signals to the above-described various actuators so as to obtain the target control amounts in accordance with an installed control program. Upon arithmetic operation to obtain the target control amounts for the actuators, the influence of external environment such as ambient temperature and an operation mode upon starting or the like are taken into consideration in addition to the operating point of the internal combustion engine 1.

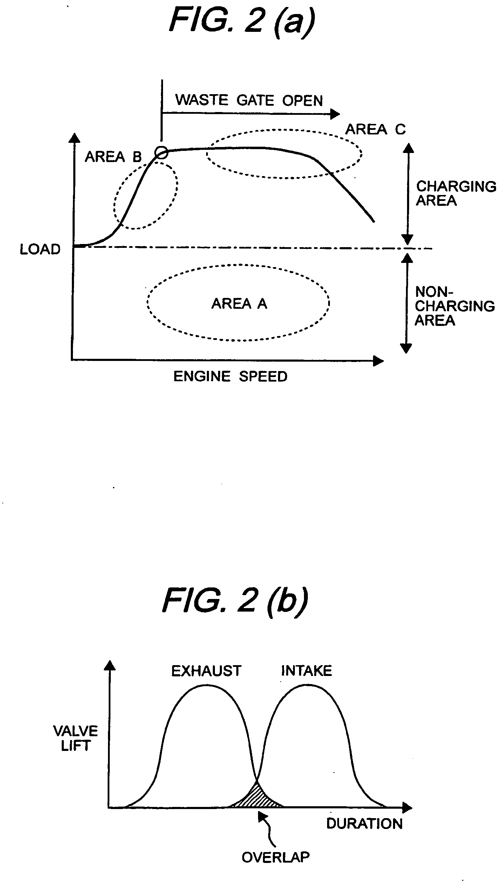

Fig. 2 is a diagram for explaining an operation range of the internal combustion engine having the turbo charger and an overlap status between the intake and exhaust valves. In the internal combustion engine having the variable valve trains 11 and 14 capable of varying phases of the intake valve 24 or the exhaust valve 25, normally, an overlap duration in which an opening time of the intake valve 24 is controlled to the advance angle side and closing time of the exhaust valve 25 is controlled to the retard angle side thereby both the intake valve 24 and the exhaust valve 25 are in an opened status, is provided in an operation area of intermediate engine speed and partial load as indicated with an area A. In the partial load area, the intake pressure is lower in comparison with the exhaust pressure with the throttle valve 7, and in the overlap duration of the intake and exhaust valves, exhaust gas flows back via the cylinder into the intake pipe 22. The burned gas remaining in the cylinder in this manner is generally called internal EGR. By causing the internal EGR, pump loss upon partial load can be reduced, and a fuel consumption rate of the internal combustion engine which performs load control with the throttle valve 7 can be reduced. Further, as the internal EGR reduces a combustion temperature, nitrogen oxide (NOx) included in the exhaust gas can be reduced.

In the turbo charger internal combustion engine, the relation between the intake pressure and the exhaust pressure differs in accordance with operation status of the internal combustion engine. In a charging status as indicated with an area B, as the charging pressure is high, the intake pressure may become higher in comparison with the exhaust pressure. On the other hand, in a charging status as indicated with an area C, normally, the exhaust pressure becomes higher in comparison with the intake pressure. Further, in the area C, as the waste gate valve 21 operates so as to prevent excessive charging status in the internal combustion engine, the relation between the intake pressure and the exhaust pressure is also influenced by the opening/closing operation of the waste gate valve 21. Upon acceleration when the internal combustion engine is in the charging status, it is necessary to set the various control amounts to realize output improvement by reducing the internal EGR ratio as much as possible. The turbo lag can be reduced by appropriately controlling the intake and exhaust valves 24 and 25 variably controllable based on the relation between the intake pressure and the exhaust pressure. The nitrogen oxide (NOx) gas can be reduced and fuel consumption can be reduced by controlling the internal EGR ratio in correspondence with the operating point.

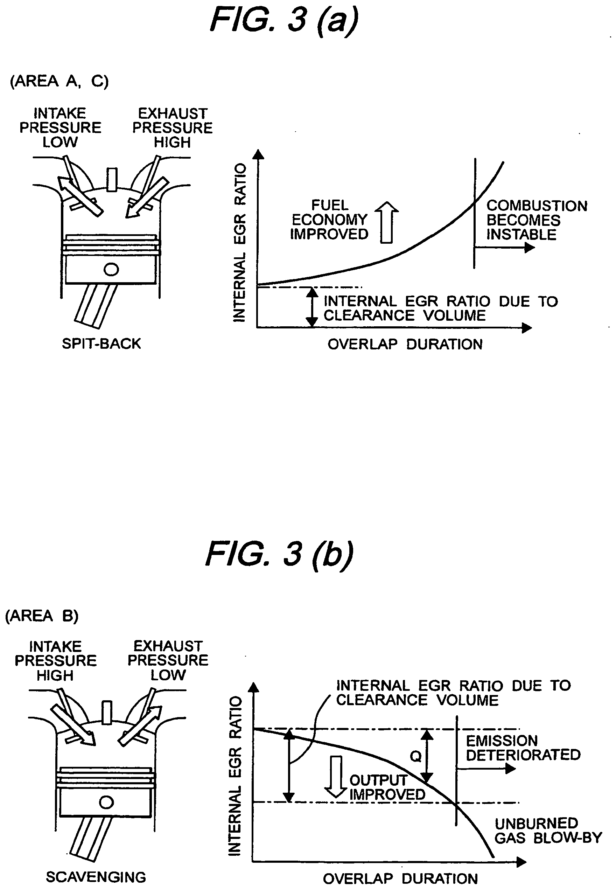

Fig. 3 is a diagram for explaining the influence of the relation between the intake pressure and the exhaust pressure on the relation between the overlap duration and the internal EGR ratio, in the turbo charger internal combustion engine. In the operation status in the area A and the area C in which the exhaust pressure becomes higher than the intake pressure as shown (a), as the overlap duration is increased, the burned gas flows from the exhaust pipe into the cylinder, accordingly the internal EGR ratio is increased. When the variable valve trains 11 and 14 are set such that the overlap duration becomes zero, the internal EGR ratio is a minimum, and the internal EGR ratio at that time is obtained based on the burned gas remaining in a clearance volume in a combustion chamber in the closing time of the exhaust valve 25.

The internal EGR ratio can be increased and the pump loss and NOx can be reduced by increasing the overlap duration, on the other hand, when the internal EGR excessively remains, problems of unstable combustion due to reduction of combustion speed, increase of unburned carbon hydride and the like occur. Accordingly, in the area A and the area C in Fig. 2, it is preferable to set the overlap duration to a value as great as possible within a range of nonoccurrence of the above problems.

On the other hand, as described above, in the turbo charger internal combustion engine, upon acceleration, in passage through the area B in Fig. 2, the intake pressure may become higher than the exhaust pressure. In this relation, relation as shown in Fig. 3(b) exists between the overlap duration and the internal EGR ratio. That is, when the variable valves are set such that the overlap duration becomes zero, the internal EGR ratio based on the burned gas remaining in the clearance volume in the combustion chamber indicates a maximum value. The internal EGR ratio is reduced by increasing the overlap duration.

In the overlap duration, as new gas (intake air) in the intake pipe is sucked into the cylinder and the new gas at higher pressure than the exhaust pressure discharges the internal EGR remaining in the cylinder to the exhaust pipe, the internal EGR is scavenged as the overlap duration is increased. While the internal EGR is scavenged, the charging efficiency taken as new gas is increased, accordingly, the output is improved. However, when the overlap duration is set to an excessively long duration, as unburned gas in addition to the internal EGR is blown by into the exhaust pipe, the problem of emission deterioration occurs. Accordingly, in the area B in Fig. 2, it is preferable to set the overlap duration to a value as great as possible within a range of nonoccurrence of the above problem.

As described above, between the areas A, C and the area B, the purpose of setting the overlap duration and problems to which attention to be paid are different, therefore it is necessary to individually provide a unit to control the overlap duration. Further, in the turbo charger internal combustion engine, when the internal combustion engine is in an operation status with acceleration/deceleration, when the operation status of the turbo charger is assisted with a motor or the like, when a selection is made among plural turbo chargers in accordance with operation area of the internal combustion engine, or when a flow rate characteristic of the turbo charger is variably controlled in accordance with operation area of the internal combustion engine, the relation between the overlap duration and the internal EGR ratio may become different from previously-adapted relation based on a balance between the intake pressure and the exhaust pressure in a steady status. To appropriately control the internal EGR ratio and the charging efficiency even in this case, it is necessary to calculate or detect fore-and-aft pressure of the cylinder which varies in a transitional status and control the overlap duration based on the fore-and-aft pressure of the cylinder.

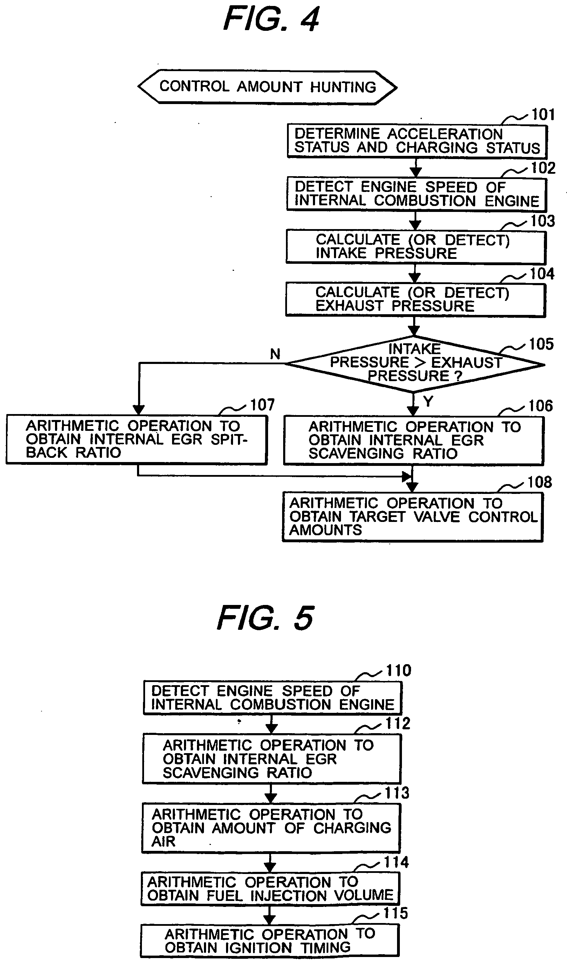

Fig. 4 is a flowchart showing a control operation by a unit to perform an arithmetic operation to obtain a target valve control amounts in opening/closing time of the intake valve and the exhaust valve and to control the overlap duration, when the intake pressure becomes higher than the exhaust pressure, upon acceleration (area B in Fig. 2) in the turbo charger internal combustion engine. At step 101, the operation status of the internal combustion engine is determined by an operation status detection unit. When the engine speed of the internal combustion engine and a time-varying amount of a load value are equal to or less than predetermined values, it is determined that the operation status is a steady status, and the various control amounts are set to preset control statuses so as to be optimized in the steady status. When it is determined at step 101 that the operation status is the acceleration status and the charging status, the following processing is performed.

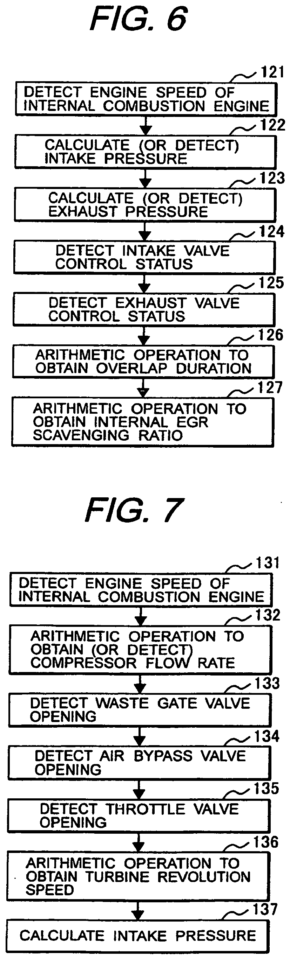

At step 102, the engine speed of the internal combustion engine is detected based on the output signal from the crank angle sensor 17 provided on the crankshaft. Next, at step 103, the intake pressure is calculated. The intake pressure can be calculated using parameters such as the engine speed of the internal combustion engine, the flow rate of exhaust gas passing through the compressor of the turbo charger 2, the revolution speed of the turbine, the opening of the waste gate valve 21 to control a charging level, the opening of the air bypass valve 20 to flow the pressure downstream of the compressor back to the upstream of the compressor, the opening of the throttle valve 7, and the air-intake detected by the air flow sensor 4 (the details will be described later in Fig. 7).

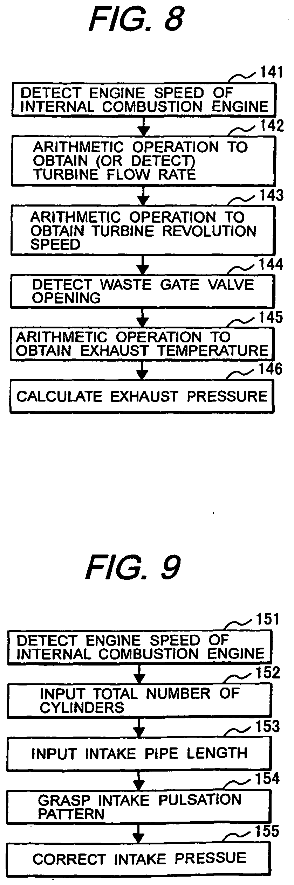

At step 104, the exhaust pressure is calculated. The exhaust pressure can be calculated with the engine speed of the internal combustion engine, the flow rate of the exhaust gas passing through the compressor of the turbo charger 2, the revolution speed of the turbine, and the opening of the waste gate valve to control the charging level as parameters (the details will be described later in Fig. 8).

When the intake pressure and the exhaust pressure have been calculated as described above, the both pressures are compared with each other at step 105. When it is determined that the intake pressure is higher in comparison with the exhaust pressure, the process proceeds to step 106, at which an arithmetic operation to obtain the internal EGR scavenging ratio is performed, and the process proceeds to step 108. At step 108, an arithmetic operation to obtain the target valve control amounts such as the opening/closing time, the lift amounts and the like of the intake and exhaust valves is performed based on the relation between the internal EGR scavenging ratio and the overlap duration such that the arithmetic-operated internal EGR scavenging ratio becomes a predetermined value.

When it is determined at step 105 that the intake pressure is equal to or lower than the exhaust pressure, the process proceeds to step 107, at which an arithmetic operation to obtain the internal EGR spit-back ratio caused in the overlap duration is performed based on the above-described intake pressure and the exhaust pressure, and at step 108, an arithmetic operation to obtain the target valve control amounts is performed based on the arithmetic-operated internal EGR spit-back ratio.

In this manner, even when the exhaust pressure is changed in accordance with the status of the turbo charger, the internal EGR ratio upon partial-load operation can be calculated with high accuracy. Then, the variable valve trains can be controlled in an operating point to further reduce the fuel consumption without causing instability of combustion status, by controlling the fuel injection volume in consideration of the arithmetic-operated internal EGR ratio. In the present embodiment, as the intake pressure and the exhaust pressure are calculated, the intake pressure and the exhaust pressure can be obtained without response delay even upon high speed revolution of the internal combustion engine.

In the present embodiment, the intake pressure is calculated at step 103, however, the intake pressure may be detected by the intake pressure sensor 8 to measure the pressure in the intake manifold. Further, the exhaust pressure is calculated at step 104, however, an exhaust pressure sensor may be provided in the exhaust pipe 23 and the exhaust pressure may be detected. Further, it may be arranged such that the relation between the intake pressure detected by the intake pressure sensor 8 and the exhaust pressure is previously obtained as data such as a map, and the exhaust pressure is obtained using this data.

Fig. 5 is a flowchart showing control by a fuel injection volume arithmetic operation unit to perform an arithmetic operation to obtain a fuel injection volume and an ignition timing arithmetic operation unit to perform an arithmetic operation to obtain the ignition timing when the intake pressure becomes higher than the exhaust pressure upon acceleration in the turbo charger internal combustion engine. At step 110, the engine speed of the internal combustion engine is detected by the crank angle sensor 17. At step 112, an arithmetic operation to obtain the internal EGR scavenging ratio is performed. At step 113, an arithmetic operation to obtain the charging efficiency sucked into the cylinder is performed by a charging efficiency arithmetic operation unit based on the output values from the respective sensors such as the air flow sensor 4, the intake temperature sensor 6 and the intake pressure sensor 8, the valve opening of the throttle valve 7, and the number of revolutions of the internal combustion engine. Upon arithmetic operation to obtain the charging efficiency sucked into the cylinder, by taking the internal EGR scavenging ratio into consideration, the charging efficiency taken into the cylinder and the internal EGR ratio can be more accurately obtained. At step 114, an arithmetic operation to obtain the fuel injection volume to realize a target air-fuel ratio is performed by a fuel injection volume arithmetic operation unit based on the charging efficiency.

At step 115, an arithmetic operation to obtain the ignition timing is performed by the ignition timing arithmetic operation unit based on the internal EGR ratio and the charging efficiency obtained by the above-described arithmetic operation. The ignition timing is set to a maximum torque timing (MBT). However, as the charging efficiency is increasedwhen the overlap duration is increased and the internal EGR scavenging ratio becomes higher, the temperature in a compression top dead point is raised. Accordingly, as knocking easily occurs, the ignition timing is corrected to the retard angle side. On the other hand, when the overlap duration is reduced and the internal EGR scavenging ratio is reduced, as the internal EGR ratio is increased along with the reduction of the charging efficiency, the combustion speed is lowered. Accordingly, the ignition timing is corrected to the advance angle side. In this manner, the fuel injection volume and the ignition timing can be more preferably controlled by performing the arithmetic operation to obtain the internal EGR scavenging amount.

Fig. 6 is a flowchart showing a control procedure by an internal EGR scavenging ratio arithmetic operation unit to perform an arithmetic operation to obtain the internal EGR ratio scavenged from the cylinder to the exhaust pipe and thus reduced, i.e., the internal EGR scavenging ratio, when the intake pressure becomes higher than the exhaust pressure upon acceleration in the turbo charger internal combustion engine (showing the details of step 106 in Fig. 4). At steps 121 to 123, the engine speed of the internal combustion engine is detected, and the intake pressure and the exhaust pressure are calculated in accordance with the procedure described at steps 102 to 104 in Fig. 4.

At step 124, the control status of the intake valve 24 is detected. In the present embodiment, the intake valve 24 is provided with the intake variable valve train 11 capable of arbitrarily controlling a relative rotational phase difference with respect to the intake cam shaft and the valve lift amount. The relative rotational phase difference with respect to the intake cam shaft is detected by the intake cam angle sensor 12, and the valve lift amount is detected based on the output signals from the angle sensor attached to the control shaft to variably control the valve lift amount and the intake cam angle sensor 12. The opening time of the intake valve 24 is detected based on the both values.

At step 125, the control status of the exhaust valve 25 is detected. A relative rotational phase difference with respect to the exhaust cam shaft is detected based on the output signal from the exhaust cam angle sensor 15, and based on this difference, the closing time of the exhaust valve 25 is detected. At step 126, the overlap duration in which both the intake valve and the exhaust valve 25 are opened is calculated based on the opening time of the intake valve 24 and the closing time of the exhaust valve 25 detected at steps 124 and 125.

At step 127, an arithmetic operation to obtain the internal EGR scavenging ratio is performed with the intake pressure, the exhaust pressure, the overlap duration and the engine speed of the internal combustion engine as parameters. As indicated as Q in Fig. 3(b), the internal EGR scavenging ratio tends to be increased as the overlap duration is increased, further, increased as the intake pressure becomes higher in comparison with the exhaust pressure. Further, as real time of passage of gas through the valve opening is reduced as the engine speed of the internal combustion engine is increased, the internal EGR scavenging ratio tends to be reduced. The internal EGR scavenging ratio can be obtained by the arithmetic operation with the intake pressure, the exhaust pressure, the overlap duration and the engine speed of the internal combustion engine as parameters, however, it may be arranged such that the relation among a pressure difference between the intake pressure and the exhaust pressure, the overlap duration and the engine speed of the internal combustion engine is obtained as data such as a map, and the internal EGR scavenging ratio is obtained by using the map.

Fig. 7 is a flowchart showing a procedure of calculation of the intake pressure by an intake pressure calculation unit in the turbo charger internal combustion engine (showing the details of control at step 103 in Fig. 4).

At step 131, the engine speed of the internal combustion engine is detected. At step 132, an arithmetic operation to obtain the compressor flow rate is performed. The compressor flow rate can be calculated based on the current turbine revolution speed and a compressor fore-and-aft pressure ratio.

At step 133, the waste gate valve opening is detected, at step 134, the air bypass valve opening is detected, and at step 134, the throttle valve opening is detected. At step 136, an arithmetic operation to obtain the turbine revolution speed at next time step which is changed upon acceleration is performed. The turbine revolution speed can be calculated by solving the following ordinary differential equation based on motive power applied by exhaust gas to the turbine blade, motive power applied by the compressor to intake air, and frictional motive power on the turbine shaft.

$$dNt^2/dt = C(1/Jt) \times (Lt - Lc - Lf) \cdots\cdots (1)$$

Note that Nt is the revolution speed of the turbine shaft; t, time; C, a constant; Jt, moment of inertia about the turbine shaft; Lt, the motive power applied by the exhaust gas to the turbine blade; Lc, the motive power applied by the compressor to the intake air; and Lf, the frictional motive power on the turbine shaft. The motive power Lt applied by the exhaust gas to the turbine blade can be calculated based on pressure at the turbine entrance and pressure at the turbine exit, the temperature of the turbine entrance, the mass and flow rate passing through the turbine and the turbine efficiency. Further, the motive power Lc applied by the compressor to the intake air can be calculated based on pressure at the compressor entrance and pressure at the compressor exit, the temperature of the compressor entrance, the mass and flow rate passing through the compressor, and the compressor efficiency. The frictional motive power on the turbine shaft can be calculated based on the turbine revolution speed.

The relation among the ratio of the pressure at the compressor entrance and the pressure at the compressor exit, the compressor flow rate, the compressor efficiency and the turbine revolution speed is previously given as map data or functions as a unique characteristic of the compressor provided in the turbo charger. Further, the relation among the ratio between the pressure at the turbine entrance and the pressure at the turbine exit, the turbine flow rate, the turbine efficiency and the turbine revolution speed is previously given as map data or functions as a unique characteristic of the turbine provided in the turbo charger. Some turbo charger internal combustion engines have a variable turbo which performs variable control on the angle of compressor blade or turbine blade based on the operating point of the internal combustion engine. Even in a turbo charger having such mechanism, the turbine revolution speed can be calculated based on the expression (1) without extensive change by taking the effect of the variable blade into the above-described map data or functions.

In the expression (1), to calculate the motive power Lt applied by the exhaust gas to the turbine blade and the motive power Lc applied by the compressor to the intake air, an arithmetic operation to obtain compressor exit pressure Pco and temperature Tco, turbine entrance pressure Pti and temperature Tci is performed. The compressor exit means an intermediate area between the compressor and the throttle valve. Compressor entrance pressure Pci and temperature Tci may be substituted with atmospheric pressure and temperature. Further, turbine exit pressure Pte is also almost substituted with the atmospheric pressure.

The arithmetic operation to obtain the compressor exit pressure Pco and the temperature Tco can be performed with the following expression.

$$dMco/dt = dMcoi/dt-dMcoo/dt-dMcoa/dt$$

$$dTco/dt = (1/(Mco \times Cp)) \times$$

$$(dHcoi/dt-dHcoo/dt-dHcoa/dt-dQco/dt)$$

$$Pco = (Mco \times R \times Tco)/Vco \quad \cdots\cdots (2)$$

Note that Mco is the mass of the compressor exit; Mcoi, the mass flowing into the compressor exit; Mcoo, the mass flowing from the compressor exit; Mcoa, the mass flowing out through the air bypass valve; Cp, specific heat; Hcoi, enthalpy flowing into the compressor exit; Hcoo, the enthalpy flowing from the compressor exit; Hcoa, the enthalpy flowing out through the air bypass valve; Qco, the energy lost in a wall surface at the compressor exit; R, a gas constant: and Vco, the volume of the compressor exit. The compression work by the compressor is taken into consideration in the enthalpy Hcoi flowing into the compressor exit. The throttle vale opening is taken into consideration in Mcoo. In a system having an inter-cooler between the compressor and the throttle valve, the effect of the inter-cooler can be considered in Qco. The arithmetic operation to obtain the pressure downstream of the throttle valve (intake pressure) can be performed from status amount of the compressor exit, the control amount of the intake variable valve train, the engine speed of the internal combustion engine, and the throttle valve opening.

Further, the arithmetic operation to obtain the turbine entrance pressure Pti and temperature Tti can be performed with the following expression.

$$dMti/dt = dMtii/dt-dMtio/dt-dMtiw/dt$$

$$dTti/dt = (1/(Mti \times Cp)) \times$$

$$(dHtii/dt-dHtio/dt-dHtiw/dt-dQti/dt)$$

$$Pti = (Mti \times R \times Tti)/Vti \quad \cdots\cdots (3)$$

Note that Mti is the mass of the turbine entrance; Mtii, the mass flowing into the turbine entrance; Mtio, the mass flowing from the turbine entrance; Mtiw, the mass flowing out through the waste gate valve; Cp, the specific heat; Htii, the enthalpy flowing into the turbine entrance; Htio, the enthalpy flowing from the turbine entrance; Htiw, the enthalpy flowing out through the waste gate valve; Qti, the energy lost in the wall surface at the turbine entrance; R, the gas constant; and Vti, the volume of the turbine entrance. The enthalpy Hcoi flowing into the turbine entrance is enthalpy of gas discharged from all the cylinders connected to the turbine. The turbine entrance pressure Pti obtained with the expression (3) can be regarded as the exhaust pressure.

The arithmetic operation to obtain the turbine revolution speed can be performed by solving the expression (1) using the physical quantities such as the pressures and temperatures calculated with the expression (2) and the expression (3).

In the present embodiment, the internal combustion engine previously holds the data on the turbine shaft revolution speed Nt upon steady operation as data such as a map by operation range of the internal combustion engine. In this arrangement, when the time variation of the operating point of the internal combustion engine is equal to or greater than a predetermined value and the operation status is determined by the operation status detection unit as the charging status, the turbine shaft revolution speed upon steady operation is given as an initial value, and the expression (1) is time-integrated, thereby the momently changing turbine shaft revolution speed in transition time can be accurately calculated.

Further, in the present embodiment, the internal combustion engine previously holds the physical quantities at the compressor exit and the turbine entrance upon steady operation of the internal combustion engine as data such as a map by operation range of the internal combustion engine. In this arrangement, when the time variation of the operating point of the internal combustion engine is equal to or greater than a predetermined value and the operation status is determined as a transition status, the physical quantities at the compressor exit and the turbine entrance upon steady operation are given as initial values, and the expressions (2) and (3) are time-integrated, thereby the momently changing physical quantities at the compressor exit and the turbine exit in the transition time can be accurately calculated.

Further, in the present embodiment, the intake pressure is calculated based on the expressions (1) to (3), however, the present invention is not limited to this arrangement. That is, the intake pressure may be detected based on the intake pressure sensor 8 provided in the surge tank downstream of the throttle valve 7. Further, the flow rate of the compressor is calculated based on the number of revolutions of the turbine and the fore-and-aft pressure ratio of the compressor, however, as the air flow sensor 4 is attached in the upstream portion of the compressor in the turbo charger, the output value from the air flow sensor 4 can be regarded as the compressor flow rate.

Fig. 8 is a flowchart showing a procedure of calculation of the exhaust pressure by an exhaust pressure calculation unit in the turbo charger internal combustion engine (showing the details of step 104 in Fig. 4). At step 141, the engine speed of the internal combustion engine is detected. At step 142, an arithmetic operation to obtain the turbine flow rate is performed, then at step 143, the turbine revolution speed is calculated, then at step 144, the waste gate valve opening is detected, then at step 145, an arithmetic operation to obtain the exhaust temperature is performed, and at step 146, an arithmetic operation to obtain the exhaust pressure is performed. At step 145 and step 146, the arithmetic operation to obtain the exhaust temperature and the exhaust pressure is performed with the above-described expressions (1) and (3).

In the present embodiment, the arithmetic operation to obtain the exhaust pressure is performed based on the expressions (1) to (3), however, the present invention is not limited to this arrangement. That is, it may be arranged such that an exhaust pressure sensor is provided between the downstream of the cylinder and the turbine entrance, and the exhaust pressure is detected based on the exhaust pressure sensor. Further, it may be arranged such that the relation between the intake pressure detected by the intake pressure sensor 8 and the exhaust pressure is previously obtained, and the exhaust pressure is obtained using this relation.

Fig. 9 is a flowchart showing a procedure of grasping a pulsation pattern of the intake pressure which occurs in the intake pipe and correcting the intake pressure (showing the details of step 103 in Fig. 4). The factors of determination of the pulsation pattern of the intake pressure are the engine speed of the internal combustion engine, the total number of cylinders, and an intake pipe length from the surge tank provided downstream of the throttle valve to the respective cylinders. As the pulsation pattern of the intake pressure can be grasped with the engine speed of the internal combustion engine and the intake pipe length from the surge tank provided downstream of the throttle valve to the respective cylinders, the relation between these parameters and the intake pulsation pattern is held as data such as a map. Then, at step 151, the engine speed of the internal combustion engine is detected, and at step 152, the total number of the cylinders is inputted. At step 153, the intake pipe length is inputted, and at step 154, the intake pulsation pattern is grasped based on the map. At step 155, the intake pressure is corrected with the grasped intake pulsation pattern.

Among the factors of determination of the pulsation pattern of the intake pressure, the total number of the cylinders and the intake pipe length from the surge tank provided downstream of the throttle valve to the respective cylinders are previously set in accordance with internal combustion engine. Accordingly, upon actual operation, the intake pulsation pattern is grasped from the engine speed of the internal combustion engine.

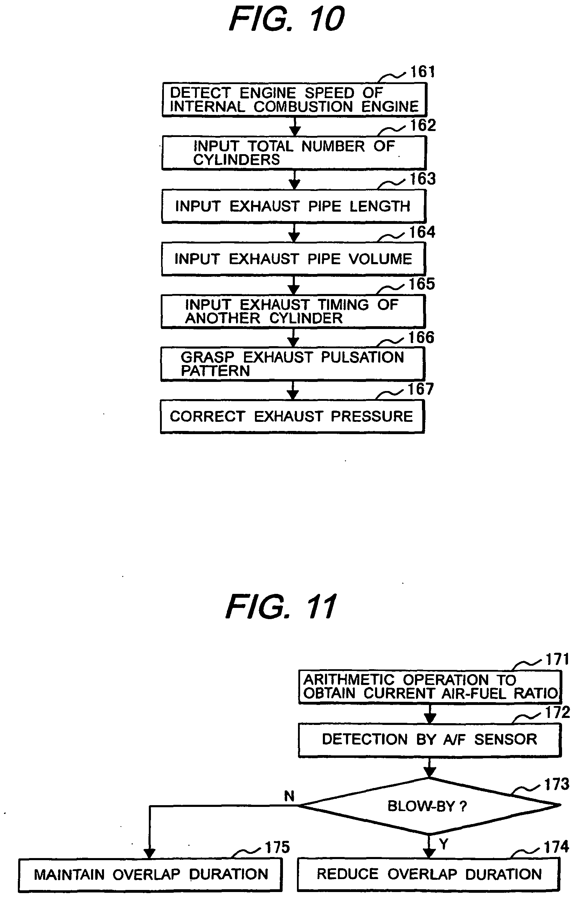

Fig. 10 is a flowchart showing a procedure of correcting the pulsation pattern of the exhaust pressure which occurs in the exhaust pipe and correcting the exhaust pressure (showing the details of step 104 in Fig. 4).

The factors of determination of the pulsation pattern of the exhaust pressure are the engine speed of the internal combustion engine, the total number of the cylinders, an exhaust pipe length from the cylinder to the exhaust collector unit, an exhaust pipe volume from the cylinder to the turbo charger, and the opening/closing time of the exhaust valve provided in another cylinder coupled via the collector unit. As the pulsation pattern of the exhaust pressure can be grasped with the engine speed of the internal combustion engine, the exhaust pipe volume from the cylinder to the turbo charger or the exhaust pipe length from the cylinder to the exhaust collector unit, the relation between these parameters and the exhaust pulsation pattern is previously held as data such as a map.

Then, at step 161, the engine speed of the internal combustion engine is detected, and at step 162, the total number of the cylinders is inputted. At step 163, the length of the exhaust pipe is inputted, and at step 164, the exhaust pipe volume is inputted. At step 165, exhaust timing with respect to the other cylinder is inputted, and at step 166, the exhaust pulsation pattern is grasped based on the map. At step 167, the exhaust pressure is corrected with the grasped exhaust pulsation pattern.

As the relation between the intake pressure and the exhaust pressure, even when the exhaust pressure is higher in a comparison with an average value, the exhaust pressure may become instantaneously lower than the intake pressure by the effect of the exhaust pulsation and the internal EGR may be scavenged in the overlap duration. Even in such case, the arithmetic operation to obtain the internal EGR scavenging ratio can be accurately performed by taking the pulsation pattern of the exhaust pressure into consideration.

Among the factors of determination of the pulsation pattern of the exhaust pressure, as the total number of the cylinders, the exhaust pipe length from the cylinder to the exhaust collector unit and the exhaust pipe volume from the cylinder to the turbo charger are previously set in accordance with internal combustion engine. Accordingly, upon actual operation, the exhaust pulsation pattern is grasped from the engine speed of the internal combustion engine and the opening/closing time of the exhaust valve provided in the other cylinder coupled via the collector unit.

Fig. 11 is a flowchart showing a control procedure of control of the overlap duration so as to prevent blow-by of unburned gas (showing the details of step 107 in Fig. 4).

At step 171, an arithmetic operation to obtain the current air-fuel ratio is performed based on the charging efficiency and the fuel injection volume. At step 172, the status of exhaust gas passing through the exhaust flow channel is detected by the A/F sensor 18, and the air-fuel ratio of unburned gas is detected based on this status. As the A/F sensor 18 detects the air-fuel ratio based on oxygen concentration in the exhaust gas, when blow-by occurs in the overlap duration, the sensor detects oxygen concentration in the unburned gas. Accordingly, the air-fuel ratio detected at step 172 is detected on the lean side.

At step 173, the current air-fuel ratio arithmetic-operated at step 171 and the air-fuel ratio detected at step 172 are compared with each other, and it is determined whether or not blow-by has occurred based on the difference between the both air-fuel ratios. When it is determined that blow-by has occurred, the process proceeds to step 174. At step 174, the variable valve train 11, 15 of the intake valve 24 or the exhaust valve 25 is feed-back controlled so as to reduce the overlap duration. When it is determined that blow-by has not occurred, the process proceeds to step 175.

In this manner, by controlling the overlap duration, the blow-by of unburned gas from the intake pipe via the cylinder to the exhaust pipe can be prevented, and the turbo lag in the turbo charger internal combustion engine can be reduced without causing emission deterioration. More preferably, the accuracy of determination of blow-by status can be improved by providing the A/F sensor 18 upstream of the turbo charger.

In the present embodiment, the blow-by status is determined based on the output value from the A/F sensor 18, however, the present invention is not limited to this arrangement. That is, it may be arranged such that an arithmetic operation to obtain a maximum charging efficiency chargeable into the cylinder determined with the volume of the cylinder is performed, the charging efficiency supplied to the cylinder is calculated based on the air flow rate detected by the air flow sensor 4, and presence/absence of unburned gas blowing-by from the intake pipe via the cylinder to the exhaust pipe in the overlap duration is determined based on a comparison between these charging efficiencies. In this case, as the maximum charging efficiency is previously set in accordance with internal combustion engine, the presence/absence of unburned gas blowing-by to the exhaust pipe may be determined by comparing the calculated charging efficiency with the maximum charging efficiency.

Further, in the present embodiment, a port injection type injector is employed as the fuel injection valve, however, the present invention is not limited to this injector. A direct-injection type injector which directly injects fuel into the cylinder may be employed. In this case, the blow-by of unburned fuel to the exhaust pipe can be prevented and emission deterioration can be prevented by setting fuel injection timing after the overlap duration.

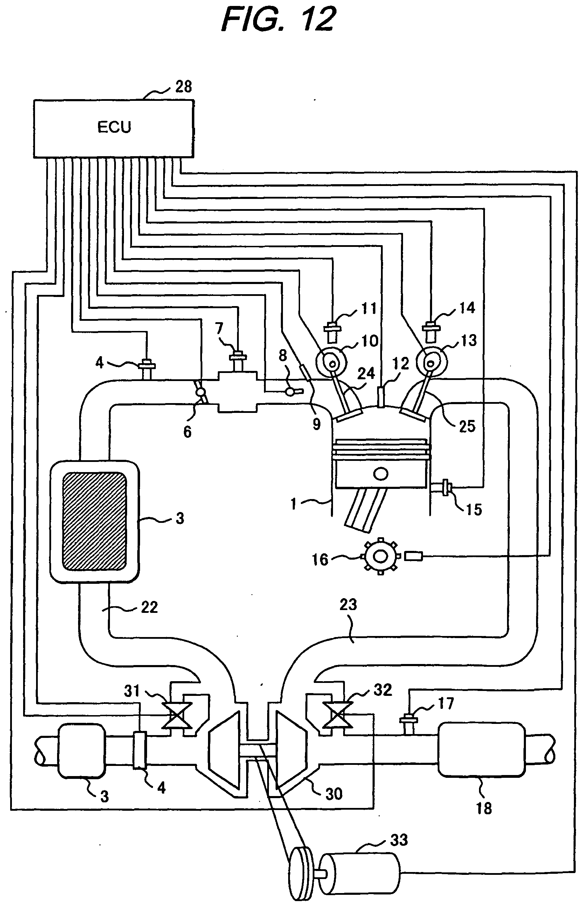

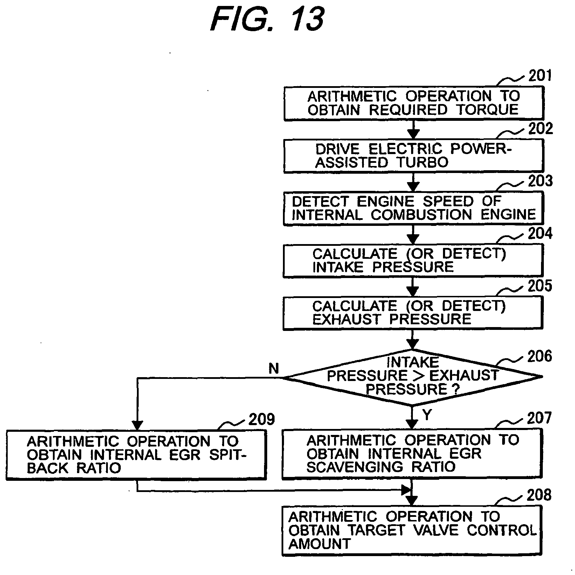

Next, a second embodiment in The control device of the internal combustion engine according to the present invention will be described using Figs. 12 and 13. Fig. 12 is a system configuration of the internal combustion engine of the present embodiment. The system of the internal combustion engine of the present embodiment has an electric power-assisted turbo 30 having a motor 33 to assist the turbine rotary motion on the turbine shaft of the turbo charger in addition to the turbo charger in the system of the first embodiment.

Fig. 13 is a flowchart showing a procedure of execution of arithmetic operation to obtain target valve control amounts when the intake pressure becomes higher than the exhaust pressure upon acceleration of the internal combustion engine having the electric power-assisted turbo charger. At step 201, an arithmetic operation to obtain the torque necessary for the internal combustion engine is performed from an accelerator actuating angle and the number of revolutions of the internal combustion engine.

At step 202, the motor 33 provided in the electric power-assisted turbo 30 is driven based on a command value from the ECU 28 in correspondence with the required torque. Step 203 to step 208 correspond to the procedure in the first embodiment described in Fig. 4 except a turbine revolution speed arithmetic operation unit. That is, in the present embodiment, as the turbine revolution speed arithmetic operation unit is different from that in Fig. 7 and Fig. 8 of the first embodiment, hereinbelow, only the turbine revolution speed arithmetic operation unit will be described. The turbine revolution speed can be estimated by solving the following ordinary differential equation in consideration of motive power applied by the assist motor 33 to the turbine shaft in addition to the motive power applied by the exhaust gas to the turbine blade, the motive power applied by the compressor to the intake air and the frictional motive power on the turbine shaft.

$$dNt^2/dt = C(1/Jt) \times (Lt-Lc-Lf+Le) \cdots\cdots (4)$$

Note that Nt is the revolution speed of the turbine; t, time; C, the constant; Jt, the moment of inertia about the turbine shaft; Lt, the motive power applied by the exhaust gas to the turbine blade; Lc, the motive power applied by the compressor to the intake air; Lf, the frictional motive power on the turbine shaft; and Le, the motive power applied by the electric power-assisted motor 33 to the turbine shaft. The motive power Lt applied by the exhaust gas to the turbine blade can be calculated based on the pressure at the turbine entrance and the pressure at the turbine exit, the temperature of the turbine entrance, the mass and flow rate passing through the turbine and the turbine efficiency. Further, the motive power Lc applied by the compressor to the intake air can be calculated based on the pressure at the compressor entrance and the pressure at the compressor exit, the temperature of the compressor entrance, the mass and flow rate passing through the compressor, and the compressor efficiency. The frictional motive power on the turbine shaft can be calculated based on the turbine revolution speed. Further, the motive power applied by the electric power-assisted motor 33 to the turbine shaft can be calculated based on electric consumption to drive the motor.

When the electric power-assisted motor 33 is in a driven status, as the compression work by the compressor is increased and the flow rate passing through the turbine is increased, the effect of internal EGR ratio scavenging is higher than a turbo charger without the electric power-assisted motor 33, and the blow-by of unburned gas easily occurs. Accordingly, it may be arranged such that when the driven status of the electric power-assisted motor 33 is equal to or greater than a predetermined value, the variable valve train 11, 14 of the intake valve 24 or the exhaust valve 25 is controlled so as not to provide the overlap duration without execution of arithmetic operation at steps 203 to 207. In this manner, by omitting the overlap duration, the emission deterioration accompanying the blow-by can be prevented. The turbo lag can be sufficiently reduced by the effect of assistance by the electric power-assisted motor.

Further, the system according to the present embodiment has the electric power-assisted turbo charger having an assist mechanism using an electric power-assisted motor, however, the present invention is not limited to this arrangement. That is, the invention is applicable to a system having a supercharger to drive a compressor based on motive power of a crankshaft of an internal combustion engine, and a system having a compressor driven with an electric power-assisted motor on the upstream side of the compressor of a turbo charger, without greatly changing the target valve control amount arithmetic operation unit described in Fig. 13.

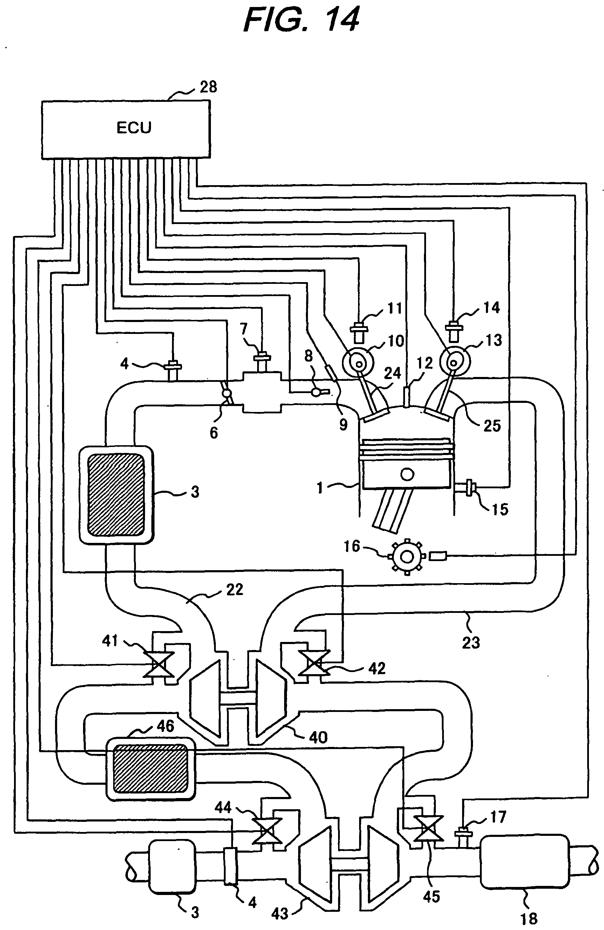

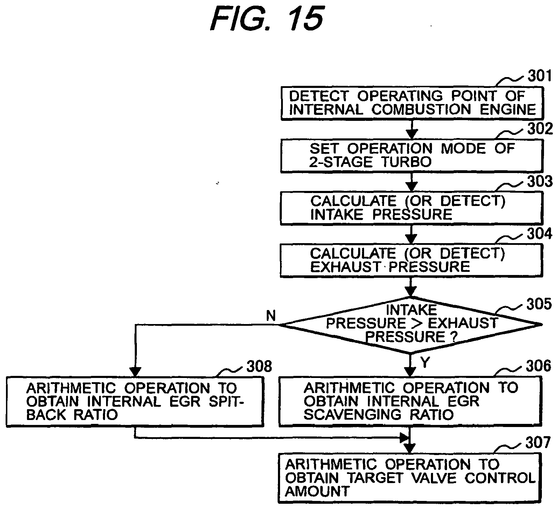

A third embodiment in The control device of the internal combustion engine according to the present invention will be described using Fig. 14 and Fig. 15. Fig. 14 is a system configuration of the internal combustion engine of the present embodiment. The system of the internal combustion engine of the present embodiment has a 2-stage turbo, charger having 2 turbo chargers with different flow rate characteristics in place of the turbo charger in the system of the first embodiment. The 2-stage turbo charger according to the present embodiment has a turbo charger 40 of low flow rate high pressure charging type and a turbo charger 43 of high flow rate low pressure charging type. The operation mode of the 2-stage turbo charger can be selected by opening/closing operation of the air bypass valves 41 and 44 and the waste gate valves 42 and 45 respectively provided in the turbo charger 40 of low flow rate high pressure charging type and the turbo charger 43 of high flow rate low pressure charging type in correspondence with the operation status of the internal combustion engine.

Fig. 15 is a flowchart showing a procedure of execution of arithmetic operation to obtain target valve control amounts when the intake pressure becomes higher than the exhaust pressure upon acceleration of the internal combustion engine having the 2-stage turbo charger. At step 301, the operating point of the internal combustion engine is detected by the operation status detection unit, and at step 302, the operation mode of the 2-stage turbo charger is selected by opening/closing operation of the waste gate valves 41 and 44 provided in the respective turbo chargers constituting the 2-stage turbo charger in correspondence with the operation status of the internal combustion engine. The arithmetic operation at step 303 to step 307 corresponds to the procedure in the first embodiment described in Fig. 4 except the turbine revolution speed arithmetic operation unit. That is, in the present embodiment, as the turbine revolution speed arithmetic operation unit in Fig. 7 and Fig. 8 is different from the first embodiment, hereinbelow, only the turbine revolution speed arithmetic operation unit of the 2-stage turbo charger will be described.

In the 2 - stage turbo charger system employed in the present embodiment, when the engine speed of the internal combustion engine is in low revolution time, the turbo charger 40 of low flow rate high pressure charging type is actuated by closing the air bypass valve 41 and the waste gate valve 42 and opening the air bypass vale 44 and the waste gate valve 45. In this case, turbine revolution speed $Nt1$ of the turbo charger 40 can be calculated using the expressions (1) to (3). Further, when the engine speed of the internal combustion engine is in high revolution time, the turbo charger 43 of high flow rate low pressure charging type is actuated by opening the air bypass valve 41 and the waste gate valve 42 and closing the air bypass vale 44 and the waste gate valve 45. Also in this case, turbine revolution speed $Nt2$ of the turbo charger 43 can be calculated using the expressions (1) to (3). In this case, the volume of the compressor exit $Vco$ in the expression (2) is specified as the volume from the compressor in an actuated status to the throttle valve. Further, the volume of the turbine entrance $Vti$ in the expression (3) is specified as the volume from the turbine in an actuated status to the cylinder. It is necessary to make changes in correspondence with the turbo charger in an actuated status.

When the engine speed of the internal combustion engine is in intermediate revolution time, to actuate both the turbo charger 40 of low flow rate high pressure charging type and the turbo charger 43 of high flow rate low pressure charging type, it is necessary to calculate status quantities of the intake pipe and the exhaust pipe in an intermediate area between the turbo charger 40 and the turbo charger 43. An arithmetic operation to obtain pressure $Pcm$ and temperature $Tcm$ in the intake pipe in the intermediate area between the turbo charger 40 and the turbo charger 43 is performed with the following expression.

$$dMcm/dt = dMcmi/dt-dMcmo/dt-dMc1ma/dt+dMc2ma/dt$$

$$dTcm/d\ t= (1/(Mcm{\times}Cp))\ \times$$

$$(dHcmi/dt-dHcmo/dt-dHc1ma/dt+dhc2ma/dt-dQcm/dt)$$

$$Pcm = (Mcm{\times}R{\times}Tcm)/Vcm \cdots\cdots (5)$$

Note that Mcm is the mass in the intake pipe in the intermediate area between the turbo charger 40 and the turbo charger 43; Mcmi, the mass flowing into the intake pipe in the intermediate area between the turbo charger 40 and the turbo charger 43; Mcmo, the mass flowing from the intake pipe in the intermediate area between the turbo charger 40 and the turbo charger 43; Mc1ma, the mass flowing out through the air bypass valve of the turbo charger 43; Mc2ma, the mass flowing in through the air bypass valve of the turbo charger 40; Cp, the specific heat; Hcmi, the enthalpy flowing into the intake pipe in the intermediate area between the turbo charger 40 and the turbo charger 43; Hcmo, the enthalpy flowing from the intake pipe in the intermediate area between the turbo charger 40 and the turbo charger 43; Hc1ma, the enthalpy flowing out through the air bypass valve 44 of the turbo charger 43; Hc2ma, the enthalpy flowing in through the air bypass valve 41 of the turbo charger 40; Qcm, the energy lost in the wall surface at the compressor exit; R, the gas constant; and Vcm, the volume of the compressor exit. The compression work by the compressor of the turbo charger 43 is taken into consideration in the enthalpy Hcmi flowing into the compressor exit. The effect of the inter-cooler 46 can be considered in Qcm.

Further, pressure Ptm and temperature Ttm in the exhaust pipe in the intermediate area between the turbo charger 40 and the turbo charger 43 is calculated with the following expression.

$$dMtm/dt = dMtmi/dt-dMtmo/dt-dMt1mw/dt+dMt2mw/dt$$

$$dTtm/dt = (1/(Mtm{\times}Cp))\ \times$$

$$(dHtmi/dt-dHtmo/dt-dHtm1w/dt+dHtm2w/dt-dQtm/dt)$$

$$Ptm = (Mtm{\times}R{\times}Ttm)/Vtm \cdots\cdots (6)$$

Note that Mtm is the mass in the exhaust pipe in the intermediate area between the turbo charger 40 and the turbo charger 43; Mtmi, the mass flowing into the exhaust pipe in the intermediate area between the turbo charger 40 and the turbo charger 43; Mtmo, the mass flowing from the exhaust pipe in the intermediate area between the turbo charger 40 and the turbo charger 43; Mt1mw, the mass flowing out through the waste gate valve 45 of the turbo charger 43; Mt2mw, the mass flowing in through the waste gate valve 42 of the turbo charger 40; Cp, the specific heat; Htmi, the enthalpy flowing into the exhaust pipe in the intermediate area between the turbo charger 40 and the turbo charger 43; Htmo, the enthalpy flowing from the exhaust pipe in the intermediate area between the turbo charger 40 and the turbo charger 43; Ht1ma, the enthalpy flowing out through the waste gate valve of the turbo charger 43; Ht2ma, the enthalpy flowing in through the waste gate valve of the turbo charger 40; Qtm, the energy lost in the wall surface in the exhaust pipe in the intermediate area between the turbo charger 40 and the turbo charger 43; R, the gas constant; and Vtm, the volume in the exhaust pipe in the intermediate area between the turbo charger 40 and the turbo charger 43.

The turbine revolution speed can be calculated based on the expression (1) for the turbo charger 40 and the turbo charger 43 using the physical quantities such as the pressures and temperatures calculated with the expression (5) and the expression (6). In this manner, by calculating the turbine revolution speed of the 2-stage turbo charger, even when the operation mode of the 2-stage turbo charger is selected, the cylinder fore-and-aft pressure can be accurately calculated.

## Claims

1. A control device of an internal combustion engine having a variable valve train (11, 14) capable of variably-controlling opening/closing time or a lift amount of at least one of an intake valve (24) and an exhaust valve (25), and a turbo charger (2),

15

the control device (28) comprising:

internal EGR scavenging ratio arithmetic operation means for, when intake pressure becomes higher in comparison with exhaust pressure in a charging status, performing an arithmetic operation to obtain an internal EGR scavenging ratio representing a value which is calculated such that it represents an internal EGR ratio in accordance with actual engine operation, wherein the internal EGR ratio in accordance with actual engine operation decreases by scavenging from a cylinder to an exhaust pipe (23) as an overlap duration in which both the intake valve (24) and the exhaust valve (25) are opened increases; and
means for controlling the overlap duration so as to control said obtained internal EGR scavenging ratio to a predetermined ratio,
**characterized in that**
said control device (28) further comprises:

an air-fuel ratio sensor (18) for detecting an air-fuel ratio of unburned gas supplied into the cylinder based on a non-gas component flowing through the exhaust pipe (23); and
means for determining presence/absence of blow-by of unburned gas from the intake pipe (22) via the cylinder to the exhaust pipe (23) in the overlap duration based on an output value from said air-fuel ratio sensor (18); and
when said means for determining presence/absence of blow-by of unburned gas determines that there is blow-by of unburned gas, said control device (28) feed-back controls the variable valve train (11, 14) to reduce the overlap duration.

2. The control device of the internal combustion engine according to claim 1, wherein said control device (28) further comprises:

means for performing an arithmetic operation to obtain a charging efficiency sucked into the cylinder based on the intake pressure, a control status of the variable valve train (11) of said intake valve (24), an engine speed of said internal combustion engine (1) and said obtained internal EGR scavenging ratio;
means for performing an arithmetic operation to obtain a fuel injection volume based on said obtained charging efficiency; and
means for performing an arithmetic operation to obtain an ignition timing based on said obtained internal EGR scavenging ratio and said obtained charging efficiency.

3. The control device of the internal combustion engine according to claim 1 or 2, wherein said internal EGR scavenging ratio arithmetic operation means has intake pressure acquisition means for acquiring the intake pressure to the cylinder, and exhaust pressure acquisition means for acquiring the exhaust pressure from the cylinder, and performs the arithmetic operation to obtain the internal EGR scavenging ratio based on the intake pressure acquired by said intake pressure acquisition means and the exhaust pressure acquired by said exhaust pressure acquisition means, the engine speed of the internal combustion engine (1) and the control status of the variable valve train (11) of said intake valve (24).

4. The control device of the internal combustion engine according to at least one of claims 1 to 3, wherein said control device (28) further comprises operation status detection means for determining an operating point of the internal combustion engine (1); and
wherein said intake pressure acquisition means acquires the intake pressure by calculation using intake pressure calculation means for calculating the intake pressure based on the operating point of the internal combustion engine (1) determined by said operation status determination means, a flow rate of gas passing through a compressor of said turbo charger (2), an opening of an air bypass valve to flow backward pressure downstream of the compressor to upstream of the compressor, and an opening of a throttle valve.

5. The control device of the internal combustion engine according to at least one of claims 1 to 4, wherein said intake pressure acquisition means has means for grasping a pulsation pattern of the intake pressure based on the engine speed of the internal combustion engine (1) and an intake pipe length from a surge tank provided downstream of the throttle valve to respective cylinders, and corrects the intake pressure calculated by said intake pressure calculation means in accordance with the grasped pulsation pattern of the intake pressure.

6. The control device of the internal combustion engine according to at least one of claims 1 to 5, wherein said control device (28) further comprises operation status detection means for determining an operating point of the internal combustion engine (1); and

wherein said exhaust pressure acquisition means acquires the exhaust pressure by calculation using exhaust pressure calculation means for calculating the exhaust pressure based on the operating point of the engine determined by said operation status determination means, a flow rate of gas passing through a turbine of the turbo charger (2), and an opening of a waste gate valve to control a charging level.

7.  The control device of the internal combustion engine according to at least one of claims 1 to 6, wherein said exhaust pressure acquisition means has means for grasping a pulsation pattern of the exhaust pressure based on the engine speed of the internal combustion engine (1), an exhaust pipe volume from the cylinder to the turbo charger (2) or an exhaust pipe length from the cylinder to an exhaust collector unit, and the opening/closing time of the exhaust valve (25) provided in another cylinder coupled via the collector unit, and corrects the exhaust pressure calculated by the exhaust pressure calculation means in accordance with the grasped pulsation pattern of the exhaust pressure.

8.  The control device of the internal combustion engine according to at least one of claims 1 to 7, wherein said turbo charger (2) has an electric power-assisted turbo in which a motor to assist turbine rotary motion is provided on a turbine shaft of the turbo charger (2); and wherein said internal EGR scavenging ratio arithmetic operation means performs the arithmetic operation to obtain the internal EGR scavenging ratio in consideration of a driving status of said electric power-assisted turbo.

9.  The control device of the internal combustion engine according to at least one of claims 1 to 8, wherein said turbo charger (2) is composed of a 2-stage turbo charger having two turbo chargers with different flow rate characteristics; wherein said control device (28) further comprises: operation status detection means for determining the operating point of the internal combustion engine; and means for selecting an operation mode of said 2-stage turbo charger by open/close operating the waste gate valve provided in said respective turbo chargers in correspondence with the operating point of the internal combustion engine determined by said operation status determination means; and wherein said internal EGR scavenging ratio arithmetic operation means performs the arithmetic operation to obtain the internal EGR scavenging ratio in consideration of the operation mode of said 2-stage turbo charger.

10. The control device of the internal combustion engine according to at least one of claims 1 to 9, wherein said turbo charger (2) is composed of a variable turbo charger having a variable blade on a compressor or a turbine, and has means for detecting an angle of said variable blade; and wherein said internal EGR scavenging ratio arithmetic operation means performs the arithmetic operation to obtain the internal EGR scavenging ratio in consideration of the angle of the variable blade detected by said means for detecting the angle of the variable blade.

11. The control device of the internal combustion engine according to at least one of claims 1 to 10, wherein said control device (28) further comprises means for performing an arithmetic operation to obtain the charging efficiency charged into the cylinder based on the intake pressure, the control status of the variable valve train (11) of said intake valve (24), the engine speed of said internal combustion engine and said obtained internal EGR scavenging ratio, and means for determining presence/absence of blow-by of unburned gas from the intake pipe (22) via the cylinder to the exhaust pipe (23) in the overlap duration based on a comparison between said obtained charging efficiency charged into the cylinder and maximum charging efficiency chargeable into the cylinder; and wherein when said means for determining presence/absence of blow-by of unburned gas determines that there is blow-by of unburned gas, feed-back controls the variable valve train (11) to reduce the overlap duration.

12. The control device of the internal combustion engine according to at least one of claims 1 to 11, wherein the control device (28) further comprises: means for performing an arithmetic operation to obtain the charging efficiency charged into the cylinder based on an air flow rate detected by an air flow sensor; and means for determining presence/absence of blow-by of unburned gas from the intake pipe (22) via the cylinder to the exhaust pipe (23) in the overlap duration based on a comparison between said obtained charging efficiency charged into the cylinder and the maximum charging efficiency chargeable into the cylinder; and wherein when said means for determining presence/absence of blow-by of unburned gas determines that there is blow-by of unburned gas, feed-back controls the variable valve train (11, 14) to reduce the overlap duration.

13. The control device of the internal combustion engine according to at least one of claims 1 to 12, wherein said internal combustion engine has a direct-injection type injector which directly injects fuel into the cylinder, and said control device (28) sets fuel injection timing of the direct-injection type injector after the overlap duration.

**Patentansprüche**

1. Steuervorrichtung einer Brennkraftmaschine, die einen variablen Ventilzug (11, 14), der die Öffnungs- und Schließzeit oder einen Hubbetrag eines Einlassventils (24) und/oder eines Auslassventils (25) variabel steuern kann, und einen Turbolader (2) besitzt,
wobei die Steuervorrichtung (28) Folgendes umfasst:

   Arithmetikoperationsmittel für ein internes AGR-Spülungsverhältnis, um dann, wenn in einem Ladestatus im Vergleich der Einlassdruck höher als der Auslassdruck ist, eine Arithmetikoperation auszuführen, um ein internes AGR-Spülungsverhältnis zu erhalten, das einen Wert darstellt, der in der Weise berechnet wird, dass er ein internes AGR-Verhältnis in Übereinstimmung mit einem tatsächlichen Kraftmaschinenbetrieb darstellt, wobei das interne AGR-Verhältnis in Übereinstimmung mit dem tatsächlichen Kraftmaschinenbetrieb durch Spülen von einem Zylinder zu einem Abgasrohr (23) abnimmt, wenn eine Überlappungsdauer, in der sowohl das Einlassventil (24) als auch das Auslassventil (25) geöffnet sind, zunimmt; und
   Mittel zum Steuern der Überlappungsdauer, um so das erhaltene interne AGR-Spülungsverhältnis auf ein vorgegebenes Verhältnis zu steuern,
   **dadurch gekennzeichnet, dass**
   die Steuervorrichtung (28) ferner Folgendes umfasst:

      einen Luft/Kraftstoffverhältnis-Sensor (18), um ein Luft/ Kraftstoffverhältnis von unverbranntem Gas, das dem Zylinder zugeführt wird, anhand einer Nichtgaskomponente, die durch das Abgasrohr (23) strömt, zu detektieren; und
      Mittel zum Bestimmen der Anwesenheit/Abwesenheit eines Vorbeiströmens unverbrannten Gases von dem Einlassrohr (22) durch den Zylinder zu dem Auslassrohr (23) während der Überlappungsdauer anhand eines Ausgangswertes von dem Luft/Kraftstoffverhältnis-Sensor (18); und

   die Steuervorrichtung (28) dann, wenn die Mittel zum Bestimmen der Anwesenheit/Abwesenheit eines Vorbeiströmens unverbrannten Gases bestimmt, dass ein Vorbeiströmen unverbrannten Gases erfolgt, eine Rückkopplungssteuerung des variablen Ventilzugs (11, 14) ausführt, um die Überlappungsdauer zu verringern.

2. Steuervorrichtung der Brennkraftmaschine nach Anspruch 1, wobei die Steuervorrichtung (28) ferner Folgendes umfasst:

   Mittel zum Ausführen einer Arithmetikoperation, um einen Ladewirkungsgrad der Ansaugung in den Zylinder anhand des Einlassdrucks, eines Steuerstatus des variablen Ventilzugs (11) des Einlassventils (24), einer Kraftmaschinendrehzahl der Brennkraftmaschine (1) und des erhaltenen internen AGR-Spülungsverhältnisses zu erhalten;
   Mittel zum Ausführen einer Arithmetikoperation, um ein Kraftstoffeinspritzvolumen anhand des erhaltenen Ladewirkungsgrades zu erhalten; und
   Mittel zum Ausführen einer Arithmetikoperation, um einen Zündzeitpunkt anhand des erhaltenen internen AGR-Spülungsverhältnisses und des erhaltenen Ladewirkungsgrades zu erhalten.

3. Steuervorrichtung der Brennkraftmaschine nach Anspruch 1 oder 2, wobei die Arithmetikoperationsmittel für das interne AGR-Spülungsverhältnis Einlassdruck-Erfassungsmittel zum Erfassen des Einlassdrucks in den Zylinder und Auslassdruck-Erfassungsmittel zum Erfassen des Auslassdrucks aus dem Zylinder besitzen und die Arithmetikoperation ausführen, um das interne AGR-Spülungsverhältnis anhand des durch die Einlassdruck-Erfassungsmittel erfassten Einlassdrucks und des durch die Auslassdruck-Erfassungsmittel erfassten Auslassdrucks, der Kraftmaschinendrehzahl der Brennkraftmaschine (1) und des Steuerstatus des variablen Ventilzugs (11) des Einlassventils (24) zu erhalten.

4. Steuervorrichtung der Brennkraftmaschine nach wenigstens einem der Ansprüche 1 bis 3,
wobei die Steuervorrichtung (28) ferner Betriebsstatus-Detektionsmittel umfasst, um einen Betriebspunkt der Brennkraftmaschine (1) zu bestimmen; und
wobei die Einlassdruck-Erfassungsmittel den Einlassdruck durch Berechnen unter Verwendung von Einlassdruck-Berechnungsmitteln zum Berechnen des Einlassdrucks anhand des Betriebspunkts der Brennkraftmaschine (1), der durch die Betriebsstatus-Bestimmungsmittel bestimmt wird, einer Durchflussmenge von Gas, das sich durch einen Kompressor des Turboladers (2) bewegt, einer Öffnung eines Luftumgehungsventils, um einen Gegendruck auf der Auslassseite des Kompressors zu der Einlassseite des Kompressors zu leiten, und einer Öffnung einer Drosselklappe erfasst.

5. Steuervorrichtung der Brennkraftmaschine nach wenigstens einem der Ansprüche 1 bis 4, wobei die Einlassdruck-Erfassungsmittel Mittel besitzen, um ein Pulsationsmuster des Einlassdrucks anhand der Kraftmaschinendrehzahl der Brennkraftmaschine (1) und einer Einlassrohrlänge von einem stromabseitig der Drosselklappe vorgesehenen Ausgleichstank zu jeweiligen Zylindern zu erfassen, und den Einlassdruck, der durch die Einlassdruck-Berechnungsmittel berechnet wird, in Übereinstimmung mit dem erfassten Pulsationsmuster des Einlassdrucks korrigieren.

6. Steuervorrichtung der Brennkraftmaschine nach wenigstens einem der Ansprüche 1 bis 5,
wobei die Steuervorrichtung (28) ferner Betriebsstatus-Detektionsmittel zum Bestimmen eines Betriebspunkts der Brennkraftmaschine (1) umfasst; und
wobei die Auslassdruck-Erfassungsmittel den Auslassdruck durch Berechnen unter Verwendung von Auslassdruck-Berechnungsmitteln zum Berechnen des Auslassdrucks anhand des Betriebspunkts der Kraftmaschine, der durch die Betriebsstatus-Bestimmungsmittel bestimmt wird, einer Durchflussmenge von Gas, das sich durch eine Turbine des Turboladers (2) bewegt, und einer Öffnung eines Ladedruckregelventils für die Steuerung eines Ladegrades erfassen.

7. Steuervorrichtung der Brennkraftmaschine nach wenigstens einem der Ansprüche 1 bis 6, wobei die Auslassdruck-Erfassungsmittel Mittel besitzen, um ein Pulsationsmuster des Auslassdrucks anhand der Kraftmaschinendrehzahl der Brennkraftmaschine (1), eines Auslassrohrvolumens von dem Zylinder zu dem Turbolader (2) oder einer Auslassrohrlänge von dem Zylinder zu einer Auslasssammlereinheit und der Öffnungs-/Schließzeit des Auslassventils (25), die in einem weiteren mit der Sammlereinheit gekoppelten Zylinder bereitgestellt wird, zu erfassen, und den Auslassdruck, der durch die Auslassdruck-Berechnungsmittel berechnet wird, in Übereinstimmung mit dem erfassten Pulsationsmuster des Auslassdrucks korrigieren.

8. Steuervorrichtung der Brennkraftmaschine nach wenigstens einem der Ansprüche 1 bis 7,
wobei der Turbolader (2) eine durch elektrische Leistung unterstützte Turboladereinrichtung besitzt, in der ein Motor, der die Turbinendrehbewegung unterstützt, an einer Turbinenwelle des Turboladers (2) vorgesehen ist; und
wobei die Arithmetikbetriebsmittel für das interne AGR-Spülungsverhältnis die Arithmetikoperation, um das interne AGR-Spülungsverhältnis zu erhalten, in Anbetracht des Antriebsstatus der mit elektrischer Leistung unterstützten Turboladereinrichtung ausführen.

9. Steuervorrichtung der Brennkraftmaschine nach wenigstens einem der Ansprüche 1 bis 8,
wobei der Turbolader (2) aus einem zweistufigen Turbolader aufgebaut ist, der zwei Turbolader mit unterschiedlichen Durchflusscharakteristiken besitzt;
wobei die Steuervorrichtung (28) ferner Folgendes umfasst: Betriebsstatus-Detektionsmittel zum Bestimmen des Betriebspunkts der Brennkraftmaschine; und Mittel zum Auswählen einer Betriebsart des zweistufigen Turboladers durch einen Öffnungs-/Schließbetrieb des Ladedruckregelventils, das in den jeweiligen Turboladern vorgesehen ist, in Übereinstimmung mit dem Betriebspunkt der Brennkraftmaschine, der durch die Betriebsstatus-Bestimmungsmittel bestimmt wird; und
wobei die Arithmetikoperationsmittel für das interne AGR-Spülungsverhältnis die Arithmetikoperation, um das interne AGR-Spülungsverhältnis zu erhalten, in Anbetracht der Betriebsart des zweistufigen Turboladers ausführen.

10. Steuervorrichtung der Brennkraftmaschine nach wenigstens einem der Ansprüche 1 bis 9,
wobei der Turbolader (2) aus einem variablen Turbolader, der an einem Kompressor oder einer Turbine eine variable Schaufel besitzt, aufgebaut ist und Mittel besitzt, um einen Winkel der variablen Schaufel zu detektieren; und
wobei die Arithmetikoperationsmittel für das interne AGR-Spülungsventil die Arithmetikoperation, um das interne AGR-Spülungsverhältnis zu erhalten, in Anbetracht des Winkels der variablen Schaufel, der durch die Mittel zum Detektieren des Winkels der variablen Schaufel detektiert wird, ausführen.

11. Steuervorrichtung der Brennkraftmaschine nach wenigstens einem der Ansprüche 1 bis 10,
wobei die Steuervorrichtung (28) ferner Mittel umfasst, um eine Arithmetikoperation auszuführen, um den Ladewirkungsgrad der Ladung in den Zylinder anhand des Einlassdrucks, des Steuerstatus des variablen Ventilzugs (11) des Einlassventils (24), der Kraftmaschinendrehzahl der Brennkraftmaschine und des erhaltenen internen AGR-Spülungsverhältnisses zu erhalten, und Mittel umfasst, um die Anwesenheit/Abwesenheit eines Vorbeiströmens unverbrannten Gases von dem Einlassrohr (22) durch den Zylinder zu dem Auslassrohr (23) während der Überlappungsdauer anhand eines Vergleichs zwischen dem erhaltenen Ladewirkungsgrad der Ladung in den Zylinder und des maximalen Ladewirkungsgrades in den Zylinder zu bestimmen; und

wobei dann, wenn die Mittel zum Bestimmen der Anwesenheit/Abwesenheit eines Vorbeiströmens unverbrannten Gases bestimmen, dass ein Vorbeiströmen unverbrannten Gases erfolgt, eine Rückkopplungssteuerung des variablen Ventilzugs (11) ausgeführt wird, um die Überlappungsdauer zu verringern.

12. Steuervorrichtung der Brennkraftmaschine nach wenigstens einem der Ansprüche 1 bis 11,
wobei die Steuervorrichtung (28) ferner Folgendes umfasst: Mittel zum Ausführen einer Arithmetikoperation, um den Ladewirkungsgrad der Ladung in den Zylinder anhand der Luftdurchflussmenge, die durch einen Luftdurchflusssensor detektiert wird, zu erhalten; und Mittel, um die Anwesenheit/Abwesenheit eines Vorbeiströmens unverbrannten Gases von dem Einlassrohr (22) durch den Zylinder zu dem Auslassrohr (23) in der Überlappungsdauer anhand eines Vergleichs zwischen dem erhaltenen Ladewirkungsgrad der Ladung in den Zylinder und des maximalen Ladewirkungsgrades in den Zylinder zu bestimmen; und
wobei dann, wenn die Mittel zum Bestimmen der Anwesenheit/Abwesenheit eines Vorbeiströmens unverbrannten Gases bestimmen, dass ein Vorbeiströmen unverbrannten Gases erfolgt, eine Rückkopplungssteuerung des variablen Ventilzugs (11, 14) ausgeführt wird, um die Überlappungsdauer zu verringern.

13. Steuervorrichtung der Brennkraftmaschine nach wenigstens einem der Ansprüche 1 bis 12, wobei die Brennkraftmaschine eine Einspritzeinrichtung des Direkteinspritzungstyps besitzt, die Kraftstoff direkt in den Zylinder einspritzt, und die Steuervorrichtung (28) die Kraftstoffeinspritzzeit der Einspritzeinrichtung des Direkteinspritzungstyps nach der Überlappungsdauer ansetzt.

## Revendications

1. Dispositif de commande d'un moteur à combustion interne ayant un mécanisme de soupape variable (11, 14) capable de commander de manière variable le temps d'ouverture/fermeture ou une amplitude de la levée d'au moins une soupape d'admission (24) ou une soupape d'échappement (25), et un turbocompresseur (2),
le dispositif de commande (28) comprenant :

   un moyen de calcul arithmétique d'un rapport de balayage interne des gaz d'échappement recyclés destiné à, quand la pression d'admission devient plus élevée par comparaison avec un la pression à l'échappement dans un état de charge, exécuter une opération arithmétique afin d'obtenir un rapport de balayage interne des gaz d'échappement recyclés représentant d'une valeur qui est calculée de telle façon qu'elle représente un rapport interne des gaz d'échappement recyclés en accord avec le fonctionnement actuel du moteur, dans lequel le rapport interne des gaz d'échappement recyclés en accord avec le fonctionnement actuel du moteur diminue par balayage depuis un cylindre vers une pipe d'échappement (23) lorsqu'une durée de recouvrement dans laquelle la soupape d'admission (24) et la soupape d'échappement (25) sont ouvertes augmente ; et
   un moyen pour commander la durée de recouvrement de manière à commander ledit rapport de balayage interne des gaz d'échappement recyclés obtenu à un rapport prédéterminé,
   **caractérisé en ce que**
   ledit dispositif de commande (28) comprend en outre :

   un capteur de rapport air/carburant (18) pour détecter un rapport air/carburant des gaz non brûlés alimentés dans le cylindre sur la base d'un composant non gazeux qui s'écoule à travers la pipe d'échappement (23) ; et
   un moyen pour déterminer la présence/absence de fuite de gaz non brûlés depuis la pipe d'admission (22) via le cylindre vers la pipe d'échappement (23) dans la durée de recouvrement sur la base d'une valeur de sortie venant dudit capteur de rapport air/carburant (18) ; et quand ledit moyen pour déterminer la présence/absence de fuite de gaz non brûlés détermine qu'il existe une fuite de gaz non brûlés, ledit dispositif de commande (28) commande le mécanisme de soupape variable (11, 14) en rétroaction afin de réduire la durée du recouvrement.

2. Dispositif de commande de moteur à combustion interne selon la revendication 1, dans lequel ledit dispositif de commande (28) comprend en outre :

   un moyen pour exécuter une opération arithmétique afin d'obtenir une efficacité de charge aspirée dans le cylindre sur la base de la pression d'admission, d'un état de commande du mécanisme de soupape variable (11) de ladite soupape d'admission (24), d'une vitesse dudit moteur à combustion interne (1) et dudit rapport de balayage interne des gaz d'échappement recyclés obtenu ;

un moyen pour exécuter une opération arithmétique afin d'obtenir un volume d'injection de carburant sur la base de ladite efficacité de charge obtenue ; et

un moyen pour exécuter une opération arithmétique afin d'obtenir une temporisation d'allumage sur la base dudit rapport de balayage interne des gaz d'échappement recyclés obtenu et de ladite efficacité de charge obtenue.

**3.** Dispositif de commande de moteur à combustion interne selon la revendication 1 ou 2, dans lequel ledit moyen d'opération arithmétique du rapport de balayage interne des gaz d'échappement recyclés comprend un moyen d'acquisition de pression d'admission pour acquérir la pression d'admission vers le cylindre, un moyen d'acquisition de pression d'échappement pour acquérir la pression d'échappement depuis le cylindre, et exécute l'opération arithmétique pour obtenir le rapport de balayage interne des gaz d'échappement recyclés sur la base de la pression d'admission acquise par ledit moyen d'acquisition de pression d'admission et de la pression d'échappement acquise par ledit moyen d'acquisition de pression d'échappement, de la vitesse du moteur à combustion interne (1), et de l'état de commande du mécanisme de soupape variable (11) de ladite soupape d'admission (24).

**4.** Dispositif de commande de moteur à combustion interne selon l'une au moins des revendications 1 à 3,
dans lequel ledit dispositif de commande (28) comprend en outre un moyen de détection d'état de fonctionnement pour déterminer un point de fonctionnement du moteur à combustion interne (1) ; et
dans lequel ledit moyen d'acquisition de pression d'admission acquiert la pression d'admission par calcul en utilisant un moyen de calcul de pression d'admission pour calculer la pression d'admission sur la base du point de fonctionnement du moteur à combustion interne (1) déterminé par ledit moyen de détermination d'état de fonctionnement, d'un débit du gaz passant à travers un compresseur dudit turbocompresseur (2), d'une ouverture d'une valve de by-pass d'air pour laisser s'écouler une pression de refoulement en aval du compresseur vers l'amont du compresseur, et d'une ouverture d'une valve papillon.

**5.** Dispositif de commande de moteur à combustion interne selon l'une au moins des revendications 1 à 4, dans lequel ledit moyen d'acquisition de pression d'admission comprend des moyens pour détecter un motif de pulsation de la pression d'admission sur la base de la vitesse du moteur à combustion interne (1) et d'une longueur de la pipe d'admission depuis un réservoir tampon prévu en aval de la valve papillon vers les cylindres respectifs, et corrige la pression d'admission calculée par ledit moyen de calcul de pression d'admission en accord avec le motif détecté des pulsations de la pression d'admission.

**6.** Dispositif de commande de moteur à combustion interne selon l'une au moins des revendications 1 à 5,
dans lequel ledit dispositif de commande (28) comprend en outre un moyen de détection d'état de fonctionnement pour déterminer un point de fonctionnement du moteur à combustion interne (1) ; et
dans lequel ledit moyen d'acquisition de pression d'échappement acquiert la pression d'échappement par un calcul en utilisant le moyen de calcul de pression d'échappement afin de calculer la pression d'échappement sur la base du point de fonctionnement du moteur déterminé par ledit moyen de détermination d'état de fonctionnement, d'un débit de gaz passant à travers une turbine du turbocompresseur (2), et d'une ouverture d'un clapet de décharge afin de commander un niveau de charge.

**7.** Dispositif de commande de moteur à combustion interne selon l'une au moins des revendications 1 à 6, dans lequel ledit moyen d'acquisition de pression d'échappement comprend un moyen pour détecter un motif de pulsation de la pression d'échappement sur la base de la vitesse du moteur à combustion interne (1), d'un volume de la pipe d'échappement depuis le cylindre jusqu'au turbocompresseur (2) ou d'une longueur de la pipe d'échappement depuis le cylindre jusqu'à une unité de collecte d'échappement, et du temps d'ouverture/fermeture de la soupape d'échappement (25) prévu dans un autre cylindre couplé via l'unité de collecte, et corrige la pression d'échappement calculée par le moyen de calcul de pression d'échappement en accord avec le motif détecté des pulsations de la pression d'échappement.

**8.** Dispositif de commande de moteur à combustion interne selon l'une au moins des revendications 1 à 7,
dans lequel ledit turbocompresseur (2) comprend un turbocompresseur assisté par puissance électrique dans lequel un moteur destiné à assister le mouvement rotatif de la turbine est prévu sur un arbre de turbine du turbocompresseur (2) ; et
dans lequel ledit moyen de calcul arithmétique du rapport de balayage interne des gaz d'échappement recyclés exécute l'opération arithmétique pour obtenir le rapport de balayage interne des gaz d'échappement recyclés en considération d'un état d'entraînement dudit turbocompresseur assisté par puissance électrique.

9. Dispositif de commande de moteur à combustion interne selon l'une au moins des revendications 1 à 8, dans lequel ledit turbocompresseur (2) est composé d'un turbocompresseur à deux étages ayant deux turbocompresseurs présentant des caractéristiques de débit différentes ; dans lequel ledit dispositif de commande (28) comprend en outre : un moyen de détection d'état de fonctionnement pour déterminer le point de fonctionnement du moteur à combustion interne ; et un moyen pour sélectionner un mode de fonctionnement dudit turbocompresseur à deux étages en commandant l'ouverture/la fermeture du clapet de décharge prévu dans lesdits turbocompresseurs respectifs en correspondance du point de fonctionnement du moteur à combustion interne déterminé par ledit moyen de détermination d'état de fonctionnement ; et dans lequel ledit moyen de calcul arithmétique du rapport de balayage interne des gaz d'échappement recyclés exécute l'opération arithmétique pour obtenir le rapport de balayage interne des gaz d'échappement recyclés en considération du mode de fonctionnement dudit turbocompresseur à deux étages.

10. Dispositif de commande de moteur à combustion interne selon l'une au moins des revendications 1 à 9, dans lequel ledit turbocompresseur (2) est composé d'un turbocompresseur variable ayant une pale variable sur un compresseur ou sur une turbine, et comprend un moyen pour détecter un angle de ladite pale variable ; et dans lequel ledit moyen de calcul arithmétique du rapport de balayage interne des gaz d'échappement recyclés exécute l'opération arithmétique pour obtenir le rapport de balayage interne des gaz d'échappement recyclés en considération de l'angle de la pale variable détectée par ledit moyen pour détecter l'angle de la pale variable.

11. Dispositif de commande de moteur à combustion interne selon l'une au moins des revendications 1 à 10, dans lequel ledit dispositif de commande (28) comprend en outre un moyen pour exécuter une opération arithmétique afin d'obtenir l'efficacité de charge chargée dans le cylindre sur la base de la pression d'admission, de l'état de commande du mécanisme de soupape variable (11) de ladite soupape d'admission (24), de la vitesse dudit moteur à combustion interne, et dudit rapport de balayage interne des gaz d'échappement recyclés obtenu, et un moyen pour déterminer la présence/l'absence de fuite de gaz non brûlés depuis la pipe d'admission (22) via le cylindre vers la pipe d'échappement (23) dans la durée de recouvrement sur la base d'une comparaison entre ladite efficacité de charge obtenue chargée dans le cylindre et l'efficacité de charge maximum susceptible d'être chargée dans le cylindre ; et dans lequel ledit moyen pour déterminer la présence/l'absence de fuite de gaz non brûlés détermine qu'il existe une fuite de gaz non brûlés, et commande le mécanisme de soupape variable (11) en rétroaction afin de réduire la durée du recouvrement.

12. Dispositif de commande de moteur à combustion interne selon l'une au moins des revendications 1 à 11, dans lequel le dispositif de commande (28) comprend en outre : un moyen pour exécuter une opération arithmétique afin d'obtenir l'efficacité de charge chargée dans le cylindre sur la base d'un débit d'air détecté par un capteur de débit d'air ; et un moyen pour déterminer la présence/l'absence de fuite de gaz non brûlés depuis la pipe d'admission (22) via le cylindre vers la pipe d'échappement (23) dans la durée de recouvrement sur la base d'une comparaison entre ladite efficacité de charge obtenue chargée dans le cylindre et l'efficacité de charge maximum susceptible d'être chargée dans le cylindre ; et dans lequel quand ledit moyen pour déterminer la présence/l'absence de fuite de gaz non brûlés détermine qu'il existe une fuite de gaz non brûlés, le dispositif de commande commande le mécanisme de soupape variable (11, 14) avec rétroaction pour réduire la durée du recouvrement.

13. Dispositif de commande de moteur à combustion interne selon l'une au moins des revendications 1 à 12, dans lequel ledit moteur à combustion interne comprend un injecteur du type à injection directe, qui injecte directement du carburant dans le cylindre, et ledit dispositif de commande (28) fixe la temporisation d'injection du carburant de l'injecteur du type à injection directe après la durée de recouvrement.

# FIG. 1

# FIG. 2 (a)

WASTE GATE OPEN

AREA C

AREA B

LOAD

CHARGING AREA

AREA A

NON-CHARGING AREA

ENGINE SPEED

# FIG. 2 (b)

EXHAUST    INTAKE

VALVE LIFT

OVERLAP

DURATION

# FIG. 3 (a)

(AREA A, C)

INTAKE PRESSURE LOW

EXHAUST PRESSURE HIGH

SPIT-BACK

INTERNAL EGR RATIO

FUEL ECONOMY IMPROVED

COMBUSTION BECOMES INSTABLE

INTERNAL EGR RATIO DUE TO CLEARANCE VOLUME

OVERLAP DURATION

# FIG. 3 (b)

(AREA B)

INTAKE PRESSURE HIGH

EXHAUST PRESSURE LOW

SCAVENGING

INTERNAL EGR RATIO

INTERNAL EGR RATIO DUE TO CLEARANCE VOLUME

EMISSION DETERIORATED

Q

OUTPUT IMPROVED

UNBURNED GAS BLOW-BY

OVERLAP DURATION

## FIG. 4

```
              CONTROL AMOUNT HUNTING

                              ┌──────────────────────────────┐ ~101
                              │ DETERMINE ACCELERATION       │
                              │ STATUS AND CHARGING STATUS   │
                              └──────────────────────────────┘
                                          │
                              ┌──────────────────────────────┐ ~102
                              │ DETECT ENGINE SPEED OF       │
                              │ INTERNAL COMBUSTION ENGINE   │
                              └──────────────────────────────┘
                                          │
                              ┌──────────────────────────────┐ ~103
                              │ CALCULATE (OR DETECT)        │
                              │ INTAKE PRESSURE              │
                              └──────────────────────────────┘
                                          │
                              ┌──────────────────────────────┐ ~104
                              │ CALCULATE (OR DETECT)        │
                              │ EXHAUST PRESSURE             │
                              └──────────────────────────────┘
                                          │
                 N                    ◇ INTAKE ◇ ~105
          ┌──────────────────────────< PRESSURE > EXHAUST >
          │                            ◇ PRESSURE ? ◇
          │                                │ Y
          ▼ ~107                           ▼ ~106
┌──────────────────────────┐   ┌──────────────────────────┐
│ ARITHMETIC OPERATION TO  │   │ ARITHMETIC OPERATION TO  │
│ OBTAIN INTERNAL EGR SPIT-│   │ OBTAIN INTERNAL EGR      │
│ BACK RATIO               │   │ SCAVENGING RATIO         │
└──────────────────────────┘   └──────────────────────────┘
          │                                │
          └────────────────────────────────┤
                                           ▼ ~108
                              ┌──────────────────────────────┐
                              │ ARITHMETIC OPERATION TO      │
                              │ OBTAIN TARGET VALVE CONTROL  │
                              │ AMOUNTS                      │
                              └──────────────────────────────┘
```

## FIG. 5

```
                    ┌──────────────────────────────┐ ~110
                    │ DETECT ENGINE SPEED OF       │
                    │ INTERNAL COMBUSTION ENGINE   │
                    └──────────────────────────────┘
                                │
                    ┌──────────────────────────────┐ ~112
                    │ ARITHMETIC OPERATION TO      │
                    │ OBTAIN INTERNAL EGR          │
                    │ SCAVENGING RATIO             │
                    └──────────────────────────────┘
                                │
                    ┌──────────────────────────────┐ ~113
                    │ ARITHMETIC OPERATION TO      │
                    │ OBTAIN AMOUNT OF CHARGING    │
                    │ AIR                          │
                    └──────────────────────────────┘
                                │
                    ┌──────────────────────────────┐ ~114
                    │ ARITHMETIC OPERATION TO      │
                    │ OBTAIN FUEL INJECTION VOLUME │
                    └──────────────────────────────┘
                                │
                    ┌──────────────────────────────┐ ~115
                    │ ARITHMETIC OPERATION TO      │
                    │ OBTAIN IGNITION TIMING       │
                    └──────────────────────────────┘
```

## FIG. 6

~121
DETECT ENGINE SPEED OF
INTERNAL COMBUSTION ENGINE

~122
CALCULATE (OR DETECT)
INTAKE PRESSURE

~123
CALCULATE (OR DETECT)
EXHAUST PRESSURE

~124
DETECT INTAKE VALVE
CONTROL STATUS

~125
DETECT EXHAUST VALVE
CONTROL STATUS

~126
ARITHMETIC OPERATION TO
OBTAIN OVERLAP DURATION

~127
ARITHMETIC OPERATION TO
OBTAIN INTERNAL EGR
SCAVENGING RATIO

## FIG. 7

~131
DETECT ENGINE SPEED OF
INTERNAL COMBUSTION ENGINE

~132
ARITHMETIC OPERATION TO
OBTAIN (OR DETECT)
COMPRESSOR FLOW RATE

~133
DETECT WASTE GATE VALVE
OPENING

~134
DETECT AIR BYPASS VALVE
OPENING

~135
DETECT THROTTLE VALVE
OPENING

~136
ARITHMETIC OPERATION TO
OBTAIN TURBINE REVOLUTION
SPEED

~137
CALCULATE INTAKE PRESSURE

## FIG. 8

```
                                    ~141
┌─────────────────────────────────────┐
│ DETECT ENGINE SPEED OF               │
│ INTERNAL COMBUSTION ENGINE           │
└─────────────────────────────────────┘
                  │      ~142
                  ▼
┌─────────────────────────────────────┐
│ ARITHMETIC OPERATION TO              │
│ OBTAIN (OR DETECT)                   │
│ TURBINE FLOW RATE                    │
└─────────────────────────────────────┘
                  │      ~143
                  ▼
┌─────────────────────────────────────┐
│ ARITHMETIC OPERATION TO              │
│ OBTAIN TURBINE REVOLUTION            │
│ SPEED                                │
└─────────────────────────────────────┘
                  │      ~144
                  ▼
┌─────────────────────────────────────┐
│ DETECT WASTE GATE VALVE              │
│ OPENING                              │
└─────────────────────────────────────┘
                  │      ~145
                  ▼
┌─────────────────────────────────────┐
│ ARITHMETIC OPERATION TO              │
│ OBTAIN EXHAUST TEMPERATURE           │
└─────────────────────────────────────┘
                  │      ~146
                  ▼
┌─────────────────────────────────────┐
│ CALCULATE EXHAUST PRESSURE           │
└─────────────────────────────────────┘
```

## FIG. 9

```
                                    ~151
┌─────────────────────────────────────┐
│ DETECT ENGINE SPEED OF               │
│ INTERNAL COMBUSTION ENGINE           │
└─────────────────────────────────────┘
                  │      ~152
                  ▼
┌─────────────────────────────────────┐
│ INPUT TOTAL NUMBER OF                │
│ CYLINDERS                            │
└─────────────────────────────────────┘
                  │      ~153
                  ▼
┌─────────────────────────────────────┐
│ INPUT INTAKE PIPE LENGTH             │
└─────────────────────────────────────┘
                  │      ~154
                  ▼
┌─────────────────────────────────────┐
│ GRASP INTAKE PULSATION               │
│ PATTERN                              │
└─────────────────────────────────────┘
                  │      ~155
                  ▼
┌─────────────────────────────────────┐
│ CORRECT INTAKE PRESSUE               │
└─────────────────────────────────────┘
```

## FIG. 10

DETECT ENGINE SPEED OF INTERNAL COMBUSTION ENGINE ~161

↓

INPUT TOTAL NUMBER OF CYLINDERS ~162

↓

INPUT EXHAUST PIPE LENGTH ~163

↓

INPUT EXHAUST PIPE VOLUME ~164

↓

INPUT EXHAUST TIMING OF ANOTHER CYLINDER ~165

↓

GRASP EXHAUST PULSATION PATTERN ~166

↓

CORRECT EXHAUST PRESSURE ~167

## FIG. 11

ARITHMETIC OPERATION TO OBTAIN CURRENT AIR-FUEL RATIO ~171

↓

DETECTION BY A/F SENSOR ~172

↓

BLOW-BY ? ~173

N → MAINTAIN OVERLAP DURATION ~175

Y → REDUCE OVERLAP DURATION ~174

# FIG. 12

# FIG. 13

```
                              ┌─────────────────────────┐ ～201
                              │ ARITHMETIC OPERATION TO │
                              │ OBTAIN REQUIRED TORQUE  │
                              └─────────────────────────┘
                                          │        ～202
                              ┌─────────────────────────┐
                              │ DRIVE ELECTRIC POWER-   │
                              │ ASSISTED TURBO          │
                              └─────────────────────────┘
                                          │        ～203
                              ┌─────────────────────────┐
                              │ DETECT ENGINE SPEED OF  │
                              │ INTERNAL COMBUSTION ENGINE │
                              └─────────────────────────┘
                                          │        ～204
                              ┌─────────────────────────┐
                              │ CALCULATE (OR DETECT)   │
                              │ INTAKE PRESSURE         │
                              └─────────────────────────┘
                                          │        ～205
                              ┌─────────────────────────┐
                              │ CALCULATE (OR DETECT)   │
                              │ EXHAUST PRESSURE        │
                              └─────────────────────────┘
                                          │
                                       ／INTAKE＼       ～206
                      N          ＜ PRESSURE > EXHAUST ＞
                                       ＼PRESSURE ?／
                      │                      │ Y
                      ▼  ～209              ▼  ～207
     ┌──────────────────────────┐  ┌──────────────────────────┐
     │ ARITHMETIC OPERATION TO  │  │ ARITHMETIC OPERATION TO  │
     │ OBTAIN INTERNAL EGR SPIT-│  │ OBTAIN INTERNAL EGR      │
     │ BACK RATIO               │  │ SCAVENGING RATIO         │
     └──────────────────────────┘  └──────────────────────────┘
                      │                      │
                      └──────────────────────▼  ～208
                              ┌──────────────────────────┐
                              │ ARITHMETIC OPERATION TO  │
                              │ OBTAIN TARGET VALVE CONTROL │
                              │ AMOUNT                   │
                              └──────────────────────────┘
```

# FIG. 14

# FIG. 15

```
                              ⌐~301
        ┌──────────────────────────────┐
        │ DETECT OPERATING POINT OF     │
        │ INTERNAL COMBUSTION ENGINE    │
        └──────────────────────────────┘
                       │         ⌐~302
        ┌──────────────────────────────┐
        │ SET OPERATION MODE OF         │
        │ 2-STAGE TURBO                 │
        └──────────────────────────────┘
                       │         ⌐~303
        ┌──────────────────────────────┐
        │ CALCULATE (OR DETECT)         │
        │ INTAKE PRESSURE               │
        └──────────────────────────────┘
                       │         ⌐~304
        ┌──────────────────────────────┐
        │ CALCULATE (OR DETECT)         │
        │ EXHAUST PRESSURE              │
        └──────────────────────────────┘
                       │
                  ╱─────────────╲     ⌐~305
      N      ╱   INTAKE            ╲
    ◀────────  PRESSURE > EXHAUST    
             ╲    PRESSURE ?        ╱
                  ╲─────────────╱
                       │ Y
```

| ARITHMETIC OPERATION TO OBTAIN INTERNAL EGR SPIT-BACK RATIO 308 | ARITHMETIC OPERATION TO OBTAIN INTERNAL EGR SCAVENGING RATIO 306 |

```
        ┌──────────────────────────────┐
        │ ARITHMETIC OPERATION TO       │  ⌐~307
        │ OBTAIN TARGET VALVE CONTROL   │
        │ AMOUNT                        │
        └──────────────────────────────┘
```

**EP 1 905 988 B1**

## REFERENCES CITED IN THE DESCRIPTION

### Patent documents cited in the description

- JP 2005307847 A
- US 2004118390 A1
- US 2005072151 A1